# EUROPÄISCHE PATENTSCHRIFT

(11) **EP 2 334 951 B1**
(45) Veröffentlichungstag und Bekanntmachung des Hinweises auf die Patenterteilung: **05.03.2014**
(21) Anmeldenummer: 09740634.2
(22) Anmeldetag: 08.09.2009
(51) Int. Cl.: F16H 9/26, F16H 37/02

(54) **RADIALTRIEB**
RADIAL DRIVE
TRANSMISSION RADIALE

(30) Priorität: 18.09.2008 DE 102008048124; 02.10.2008 DE 202008013525 U; 03.11.2008 DE 102008054304; 29.12.2008 DE 202008017111 U
(43) Veröffentlichungstag der Anmeldung: 22.06.2011
(73) Patentinhaber: Suplicki, Kurt, 66839 Schmelz (DE)
(72) Erfinder: Suplicki, Kurt, 66839 Schmelz (DE)
(86) Internationale Anmeldenummer: PCT/DE2009/001261
(87) Internationale Veröffentlichungsnummer: WO 2010/031380

(56) Entgegenhaltungen:
- EP-A- 0 736 701
- EP-A- 1 253 350
- WO-A-00/11371
- BE-A3- 1 007 942
- DE-A1- 3 918 348
- DE-A1- 4 300 936
- DE-A1-102008 054 304
- DE-U1-202008 013 525
- US-A- 2 197 014

## Beschreibung

Die Erfindung ist dem Maschinenbau zuzurechnen, es handelt sich um kombinierte Kettentrieb- und Zahnradgetriebesatzausführungen die mit den kombinierten Planetensätzen eine gewisse Ähnlichkeit aufzeigen. Die Erfindung ist breit einsetzbar, ihr Einsatzspektrum reicht dabei vom eigenständigen, beziehungsweise zwischengeschalteten Antriebsbauteil bis hin zum Einsatz in Getrieben.

Im Bereich der kombinierten Planetensätze gibt es unterschiedliche Bauformen. Den kombinierten Planetensätzen sind der Ravigneaux-Satz und der Simpson-Satz zuzurechnen.

Zur Basisausstattung des Ravigneaux-Satzes gehören beispielsweise zwei unterschiedlich große und gleich breite im Zentrum nebeneinander drehbar auf verschiedenen Achsen fest positionierte zentrale Zahnräder, der drehbar gelagerte Träger, die auf dem Träger drehbar gelagerten in der Größe und Breite unterschiedlichen Zahnräder und die innenverzahnte Röhre. Es wird zwischen zwei Arten bei den unterschiedlichen Zahnrädern unterschieden. Das heißt es gibt Zahnräder die groß und schmal sind und welche die klein und breit sind. Die jeweiligen Zahnräder sind abwechselnd hintereinander um die zentralen Zahnräder angeordnet. Dabei bilden die von ihren Ausmaßen her kleinen und breiten Zahnräder, die näher zum Zentrum gelagert sind, jeweils einen Kämmeingriff mit dem größeren zentralen Zahnrad, dem Antriebszahnrad. Des Weiteren bildet jeweils jedes kleine und breite Zahnrad mit dem neben ihm gelagerten großen und schmalen Zahnrad - jedes große und schmale Zahnrad ist zusätzlich kämmend mit dem kleinen zentralen Zahnrad dem Abstützzahnrad verbunden - einen Kämmeingriff. Die großen und schmalen Zahnräder sind bezüglich ihres Mittelpunktes weiter weg vom Zentrum gelagert als die jeweiligen kleinen und breiten Zahnräder. Im Folgenden werden die großen und schmalen Zahnräder als Umlaufzahnräder und die kleinen und breiten Zahnräder als Planetenzahnräder bezeichnet. Die jeweiligen Umlaufzahnräder sind des Weiteren mit der innenverzahnten Röhre kämmend verbunden.

Der Ravigneaux-Satz weist jedoch auch Nachteile auf.
Der erste Nachteil besteht darin, dass eine volle Umdrehung des Antriebszahnrades, welches die Übertragung der Drehbewegung über die kleinen und breiten Planetenzahnräder auf die Umlaufzahnräder bewirkt keinen vollen Umlauf der jeweiligen Umlaufszahnräder um das kleinere zentrale Zahnrad dem Abstützzahnrad bewirkt.

Ein weiterer Nachteil besteht darin, dass das zentrale Antriebszahnrad in etwa die gleiche Größe wie das neben ihm positionierte Abstützzahnrad hat. Bei kombinierten Planetensätzen ist dies nicht abwendbar, was sich wiederum ungünstig auf das Ausgangsdrehmoment des Ravigneaux-Satzes auswirkt, da das Eingangsdrehmoment das Ausgangsdrehmoment beeinflusst.
Ein kleineres zentrales Antriebszahnrad könnte somit, bei gleichem Drehmoment im Vergleich zu einem größeren Antriebszahnrad, eine größere Kraft übertragen.
Auch aus US3744592A, DE4300936A1 und DE 2513004A1 gehen Radialtriebe hervor, bei denen ein kettentrieb mit einem Zahnradgetriebe kombiniert ist.
Der Erfindung liegt die Aufgabe zugrunde im Rahmen des Radialtriebes Kettentrieb- und Zahnradgetriebesatzausführungen zu entwickeln, die die wesentlichen Nachteile des Ravigneaux-Satzes nicht beinhalten, diesbezüglich sind die Kettentrieb- und Zahnradgetriebesatzausführungen so zu gestalten, dass jeweils eine Umdrehung der Antriebswelle einen Umlauf der Zahnräder des betreffenden Zahnradgetriebes um ein zentrales Abstützzahnrad bewirken.

Die Aufgabe wird durch einen Radialtrieb gemäß Patentanspruch 1 gelöst. Erfindungsgemäß überträgt sich die über die Antriebswelle eingebrachte Drehbewegung über die Kettenantriebsräder, die Ketten und die Kettenräder auf die Zahnräder des jeweiligen Zahnradgetriebes und bewirkt aus einer Umdrehung der Antriebswelle einen Umlauf der Zahnräder des jeweiligen Zahnradgetriebes; des Weiteren wird die Bewegung über die jeweilige innenverzahnte Röhre auf die jeweilige
Bewegungsübertragungskomponenten übertragen.
Dadurch bewirkt ein Umlauf der jeweiligen Zahnräder um das jeweilige Abstützzahnrad des jeweiligen Bauteils Abstützzahnrad mit Übergangsstück mehr als eine volle Umdrehung der innenverzahnten Röhre. Das heißt der Mitnahmeeffekt der jeweiligen Zahnräder bewirkt beim kämmenden Abrollen auf dem jeweiligen Abstützzahnrad ein zusätzliches weiteres Drehen der innenverzahnten Röhre - zusätzlich zur bereits geleisteten vollen Umdrehung der innenverzahnten Röhre - um die Bewegungsstrecke die dem Umfang des Abstützzahnrades entspricht.

Weitere vorteilhafte und heraushebende Merkmale des erfindungsgemäßen Radialtriebes sind den Unteransprüchen zu entnehmen.

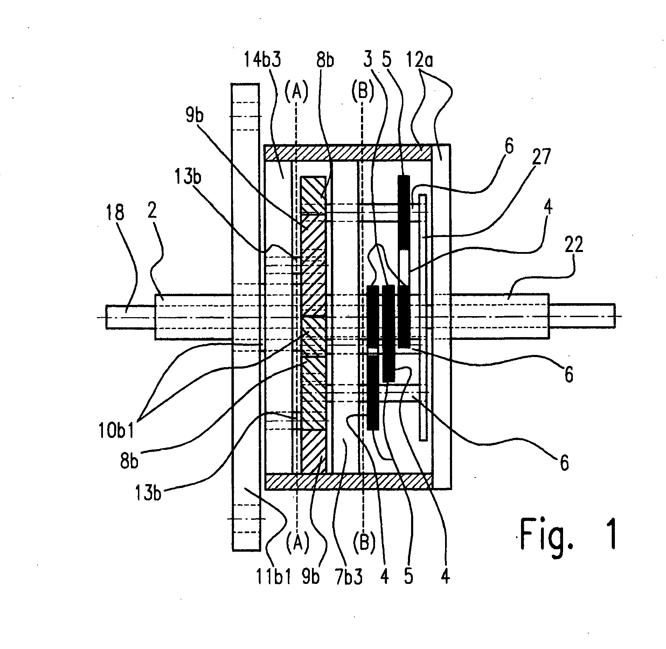

Die Erfindung wird anhand von sechs Ausführungen, unter Bezugnahme auf die Fig. 1 - 6, erläutert.

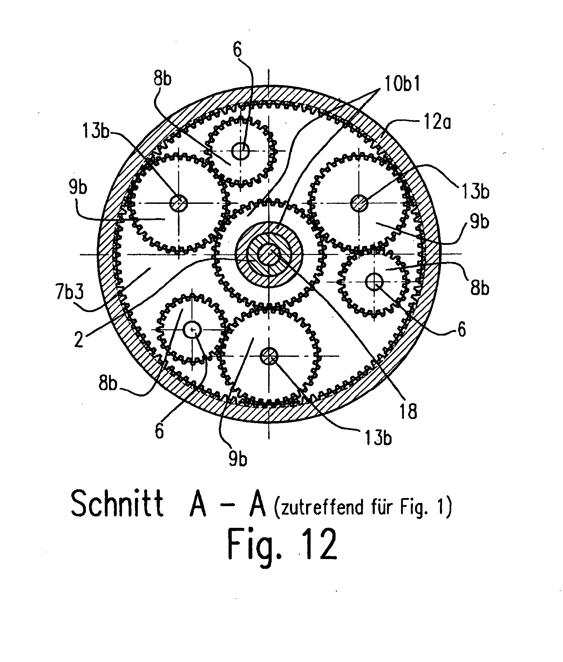

Die Fig. 12 - 28 geben Aufschluss über Querschnittdarstellungen zum Radialtrieb der Fig. 1 - 6.

Vor dem ersten Ausführungsbeispiel wird der Radialtrieb aus den Fig. 1 - 6 allgemein beschrieben. Hierbei wird im Besonderen Bezug auf die jeweiligen Bauteile des Radialtriebs aus den Fig. 1 - 6 in den verschiedenen Ausführungsbeispielen genommen.
Zunächst werden die Gemeinsamkeiten der unterschiedlichen Ausführungen des Radialtriebs, unter Bezugnahme auf die Fig. 1 - 6, dargelegt.
In den Ausführungsbeispielen eins bis sechs werden die einzelnen Ausführungen des Radialtriebs ebenso anhand der Fig. 1 - 6 beschrieben. Die Fig. 12 - 28 verdeutlichen dabei im Besonderen das Zusammenspiel der in Beziehung stehenden Bauteile der Radialtriebausführungen. Die Ansatzpunkte der Querschnittdarstellungen (Schnitte) sind aus den Fig. 1 - 6 zu ersehen.
Die Fig. 7 - 8 zeigen weitere beispielhafte Ausführungen des Radialtriebs.
In den Fig. 9, 10, 11 sind Beispielkombinationen von Zahnradgetrieben und Kettentrieben für weitere Ausführungen des Radialtriebs, in Querschnittdarstellungen, wiedergegeben.
Die Fig. 1 - 6 zeigen mehrere Ausführungen des Radialtriebs in Längsschnittdarstellungen mit den folgenden Inhalten.

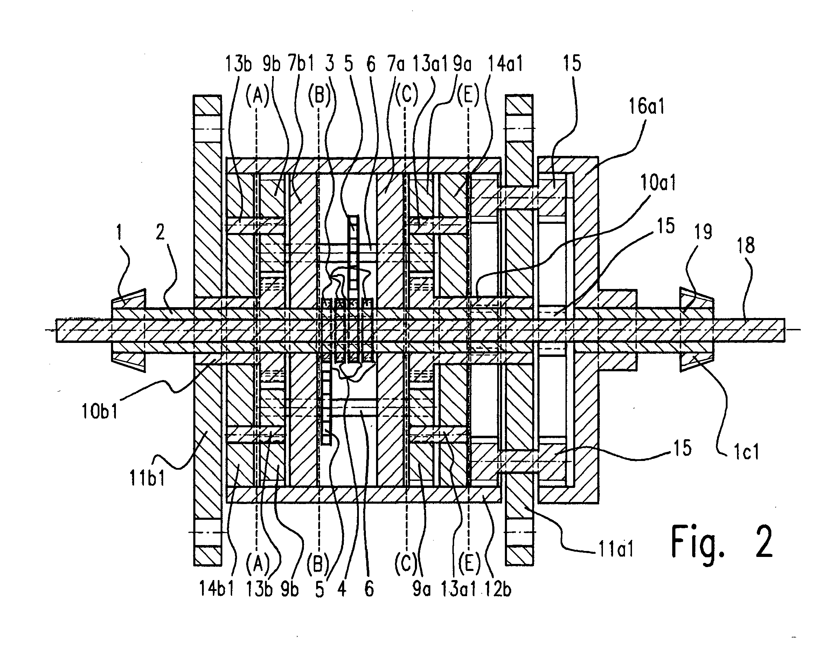

- **Fig. 1**: Radialtrieb mit Bewegungsübertragung über die innenverzahnte Röhre a (12a) und die Bewegungsübertragungswelle d (22). Der Längsschnitt durch Fig. 1 betrifft, im Gegensatz zu den Fig. 2 - 6 bei denen es sich um einen kompletten Längsschnitt handelt, nur die innenverzahnte Röhre a (12a) im Bereich des Zahnradgetriebes und der Kettentriebe
- **Fig. 2**: Radialtrieb mit Bewegungsübertragung über das Bewegungsüberträgerabtriebsrad a1 (16a1) auf die Bewegungsübertragungswelle a (19)

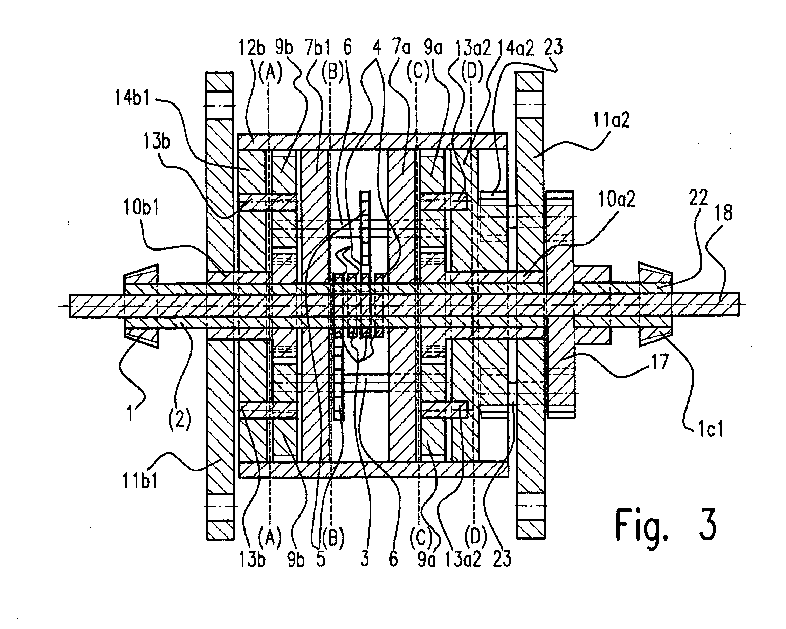

- **Fig. 3**: Radialtrieb mit Bewegungsübertragung über das Bewegungsüberträgerabtriebsrad (17) auf die Bewegungsübertragungswelle d (22)

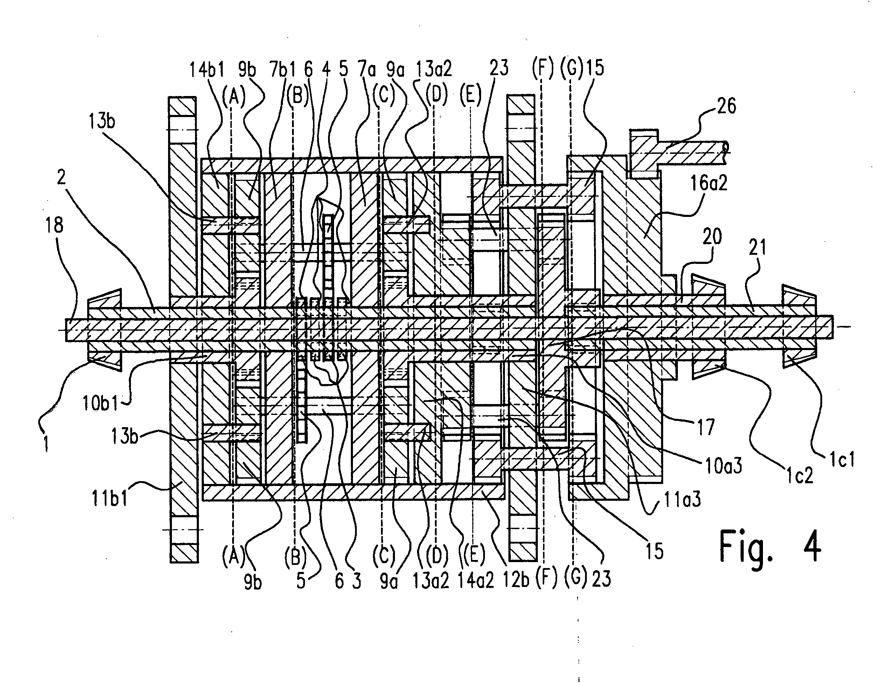

- **Fig. 4**: Radialtrieb mit den alternativen Bewegungsübertragungen über die Bewegungsüberträgerabtriebsräder a2 (16a2) und / oder (17) auf die jeweilige Bewegungsübertragungswelle b (20) und / oder die Bewegungsübertragungswelle c (21)

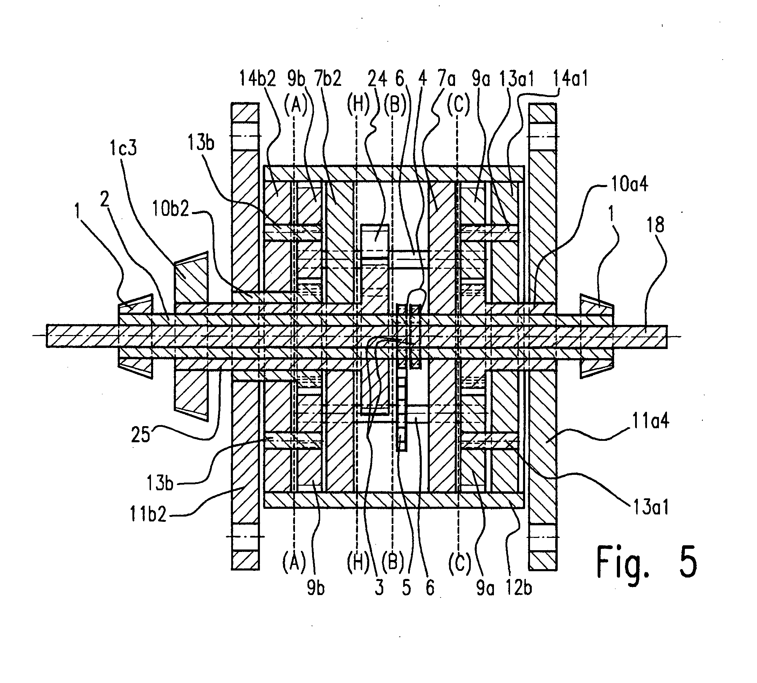

- **Fig. 5**: Radialtrieb mit Bewegungsübertragung über das Bewegungsüberträgerab- triebsrad mit Übergangsstück b3 (25)

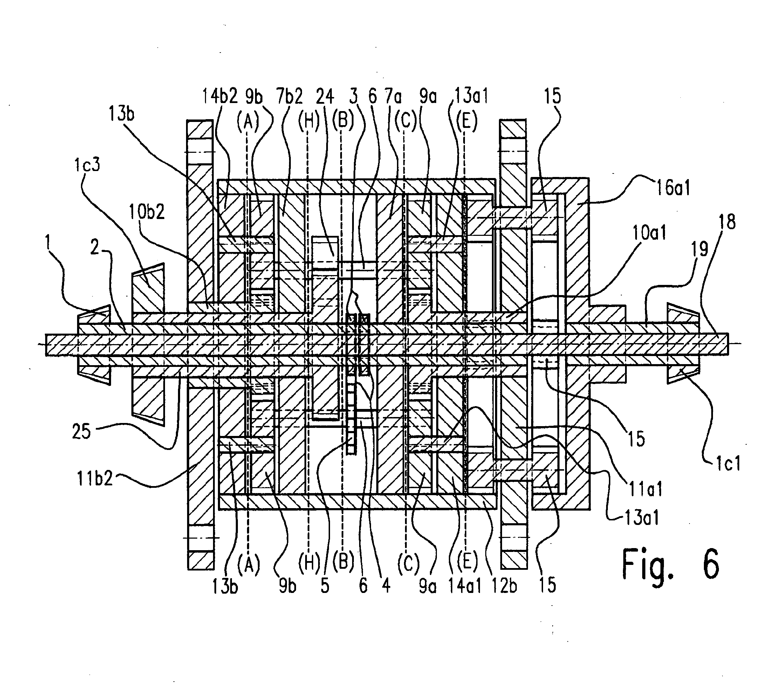

- **Fig. 6**: Radialtrieb mit den alternativen Bewegungsübertragungen über das Bewegungsüberträgerabtriebsrad mit Übergangsstück b3 (25) und / oder über das Bewegungsüberträgerabtriebsrad a1 (16a1) auf die Bewegungsübertragungswelle a (19)

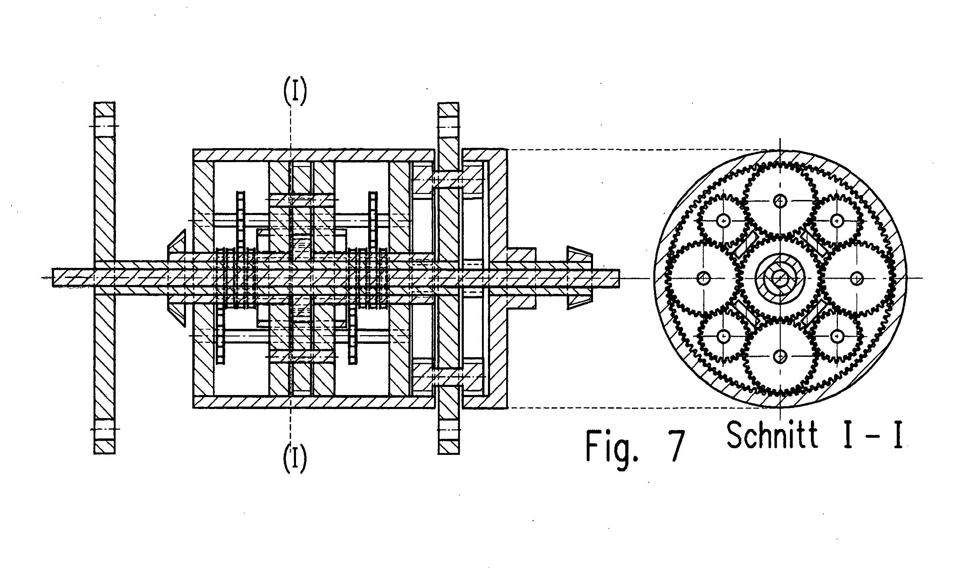

Die Fig. 7 - 11 zeigen weitere Beispiele des Radialtriebs beziehungsweise Kombinationsmöglichkeiten von Zahnradgetrieben und Kettentrieben.
- **Fig. 7**: Beispielhafte Ausführung für einen Radialtrieb mit einem Zahnradgetriebe und mehreren jeweils seitlich vom Zahnradgetriebe angeordneten Kettentrieben in Längsschnittdarstellung

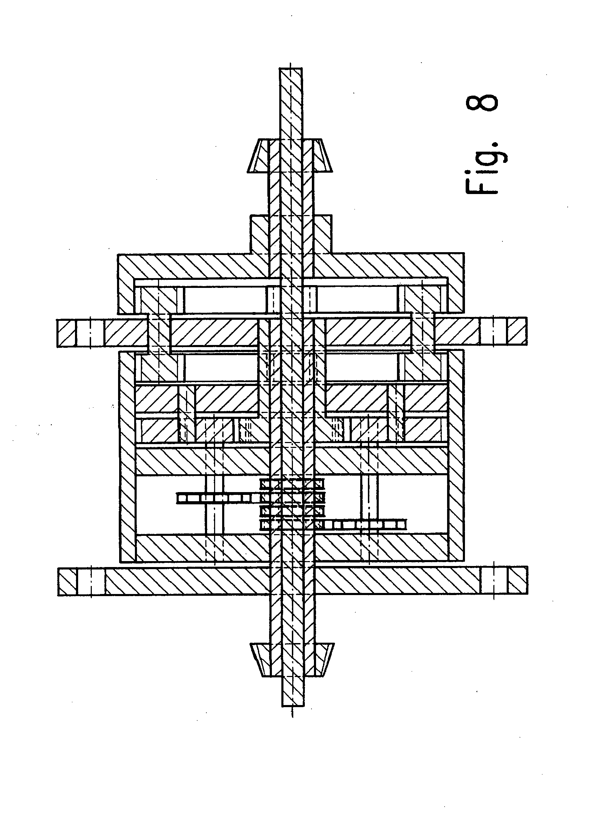

- **Fig. 8**: Beispielhafte Ausführung für einen Radialtrieb mit einem Zahnradgetriebe und mehreren vorgeschalteten Kettentrieben in Längsschnittdarstellung

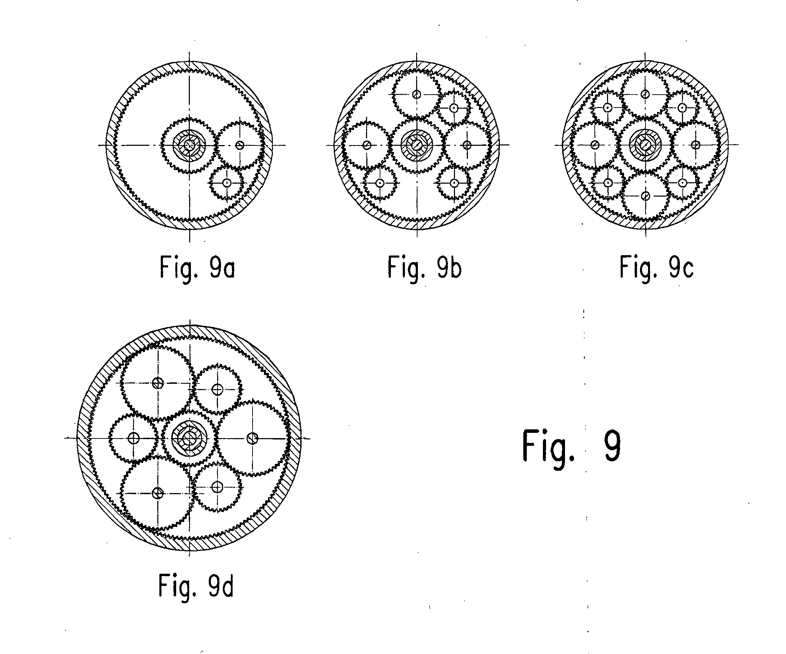

- **Fig. 9**: Beispielkombinationen von Zahnradgetrieben im Radialtrieb in Querschnittdarstellung

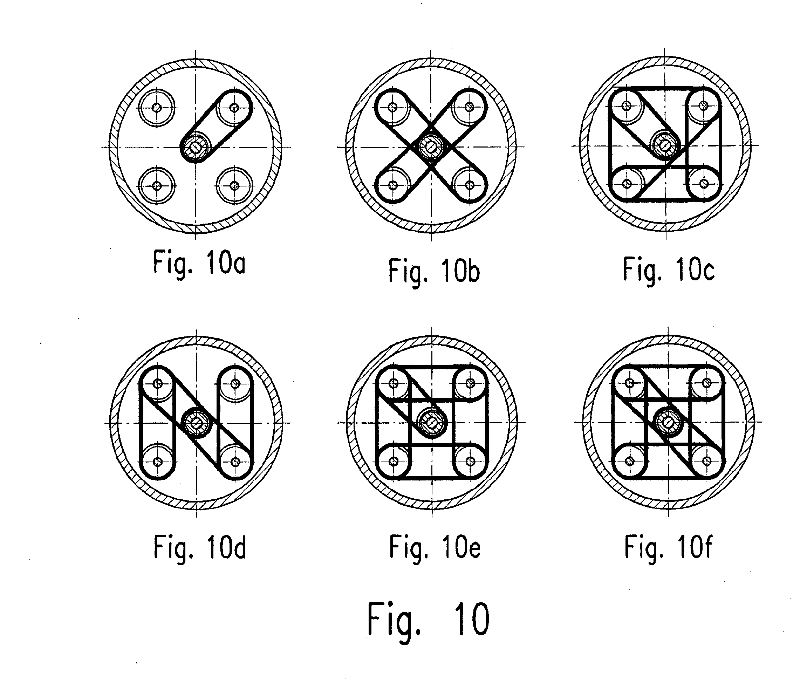

- **Fig. 10**: Beispielkombinationen von Kettentrieben im Radialtrieb in Querschnittdarstellung

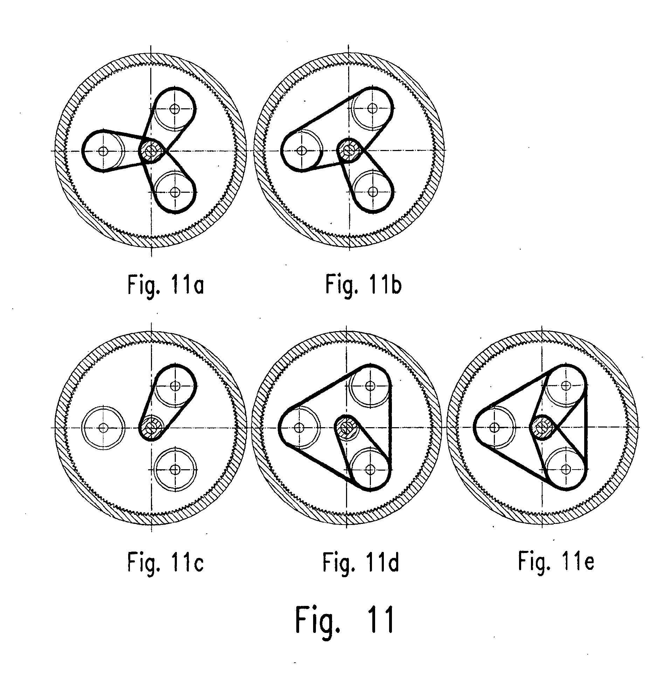

- **Fig. 11**: Beispielkombinationen von Kettentrieben im Radialtrieb in Querschnittdarstellung

Die Fig. 12 - 28 zeigen den Radialtrieb der Fig. 1 - 6 in Querschnittdarstellungen mit den folgenden Inhalten.
- **Fig. 12**: Schnitt A - A, zutreffend für die Fig. 1

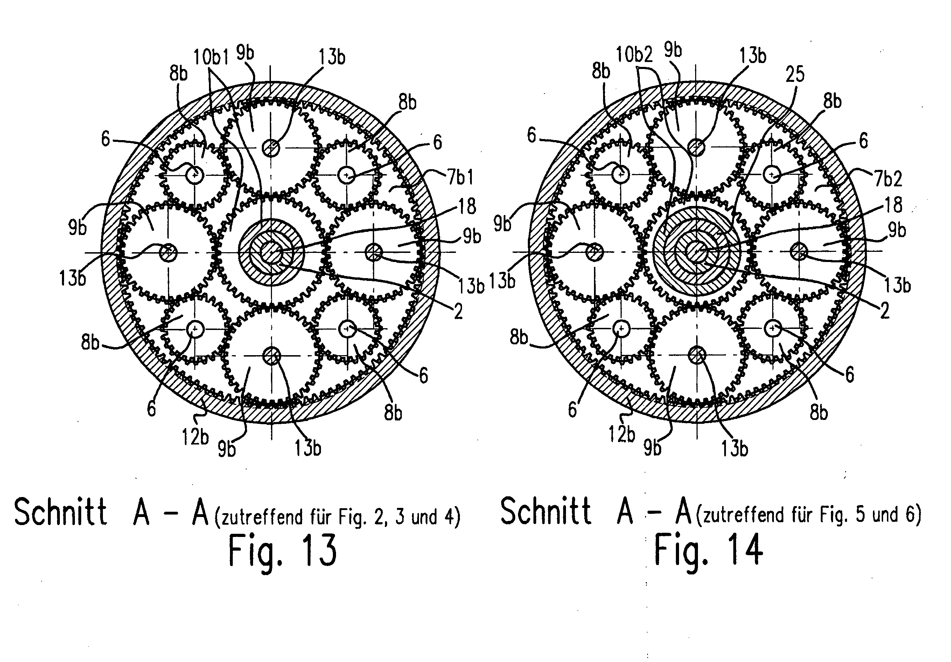

- **Fig. 13**: Schnitt A - A, zutreffend für die Fig. 2, 3 und 4
- **Fig. 14**: Schnitt A - A, zutreffend für die Fig. 5 und 6

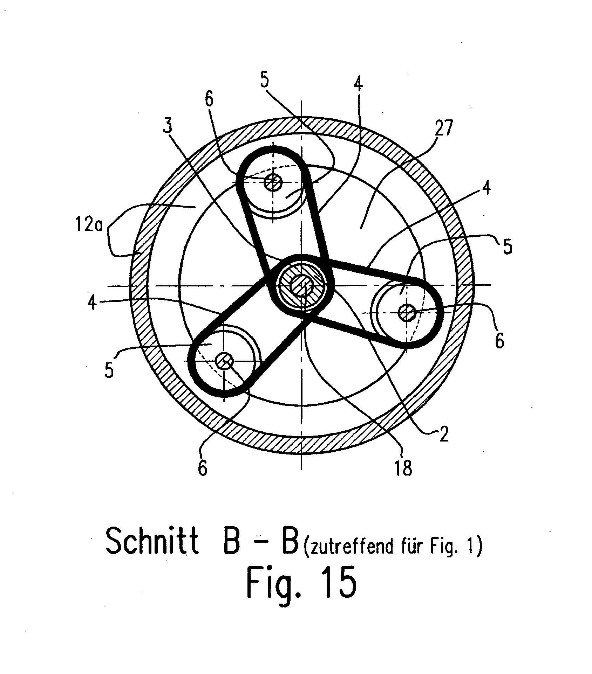

- **Fig. 15**: Schnitt B - B, zutreffend für die Fig. 1

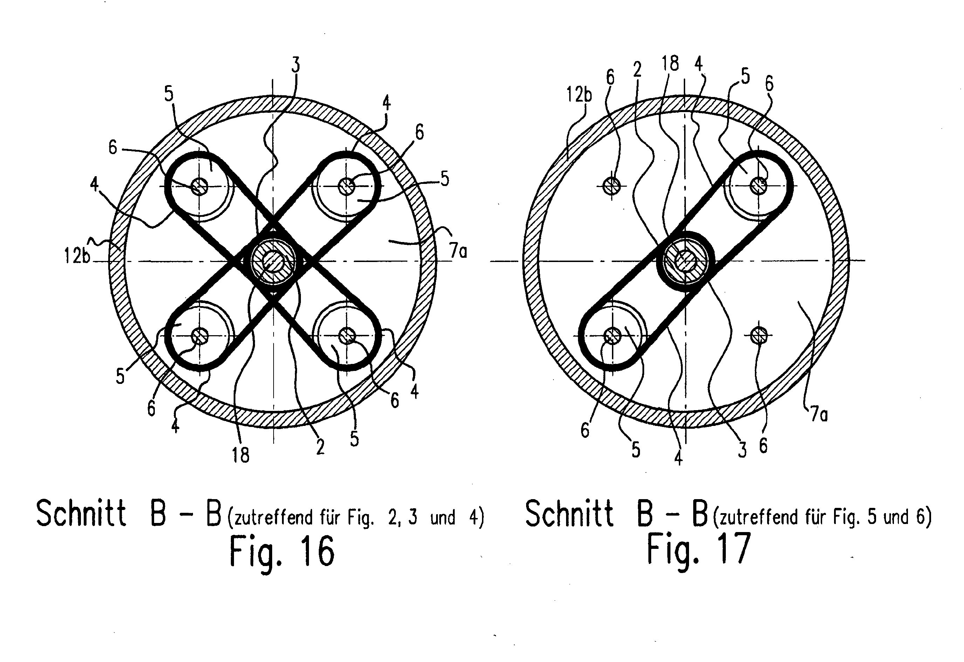

- **Fig. 16**: Schnitt B - B, zutreffend für die Fig. 2, 3 und 4
- **Fig. 17**: Schnitt B - B, zutreffend für die Fig. 5 und 6

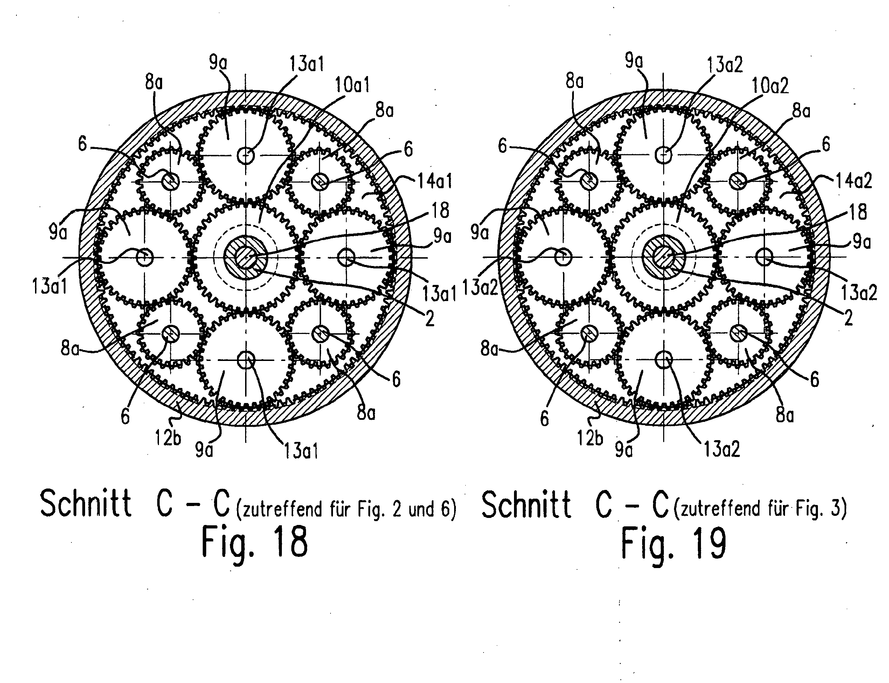

- **Fig. 18**: Schnitt C - C, zutreffend für die Fig. 2 und 6
- **Fig. 19**: Schnitt C - C, zutreffend für die Fig. 3

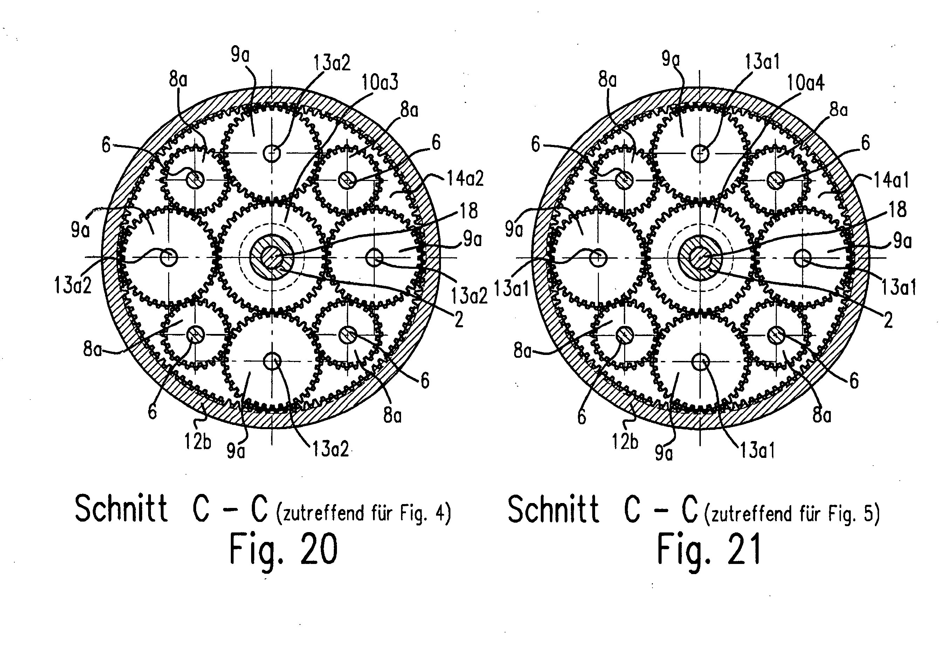

- **Fig. 20**: Schnitt C - C, zutreffend für die Fig. 4
- **Fig. 21**: Schnitt C - C, zutreffend für die Fig. 5

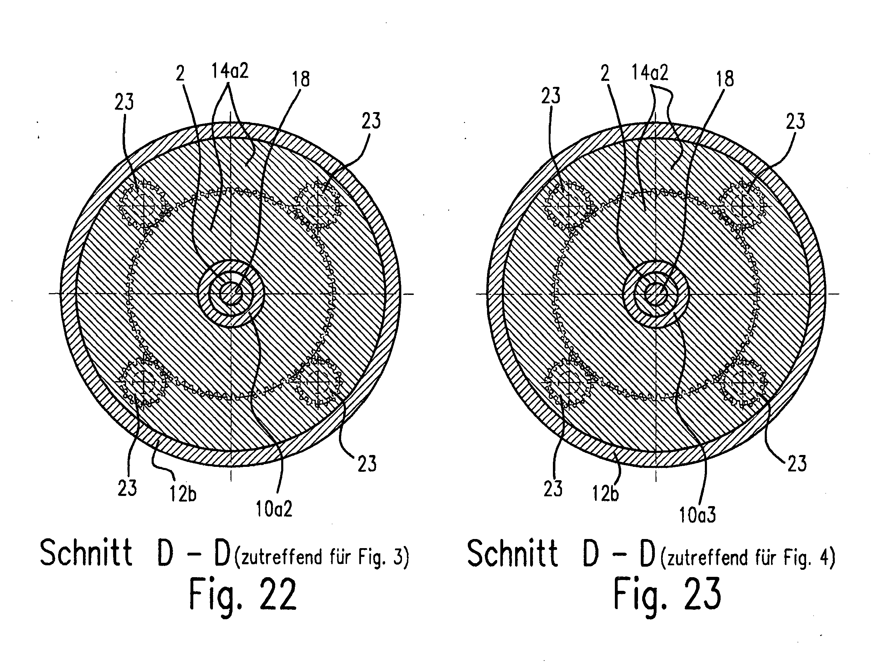

- **Fig. 22**: Schnitt D - D, zutreffend für die Fig. 3
- **Fig. 23**: Schnitt D - D, zutreffend für die Fig. 4

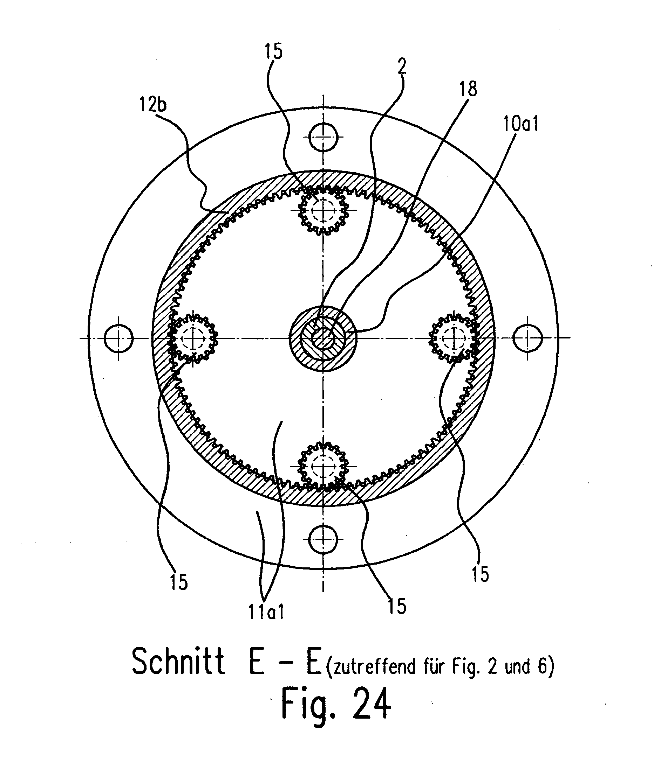

- **Fig. 24**: Schnitt E - E, zutreffend für die Fig. 2 und 6

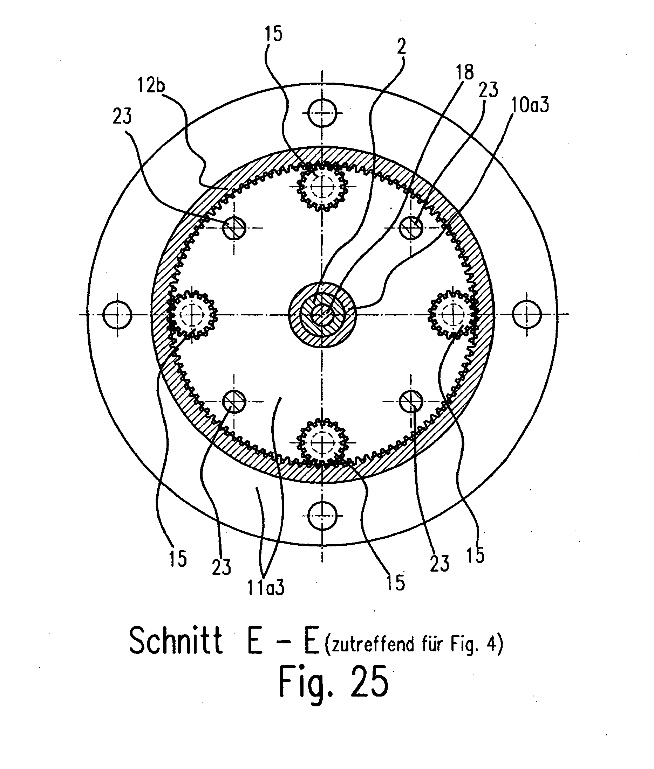

- **Fig. 25**: Schnitt E - E, zutreffend für die Fig. 4

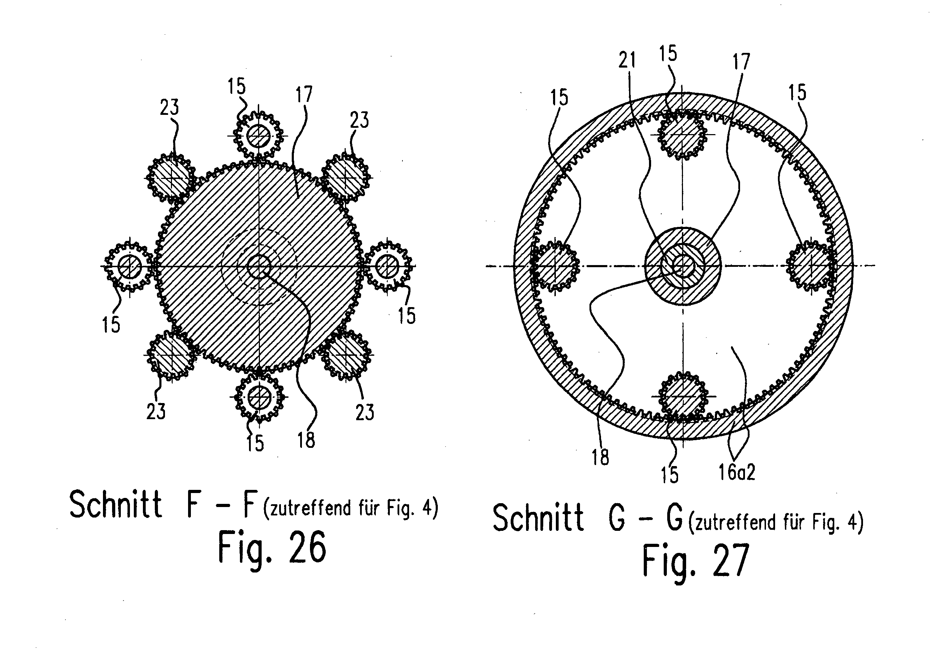

- **Fig. 26**: Schnitt F - F, zutreffend für die Fig. 4
- **Fig. 27**: Schnitt G - G, zutreffend für die Fig. 4

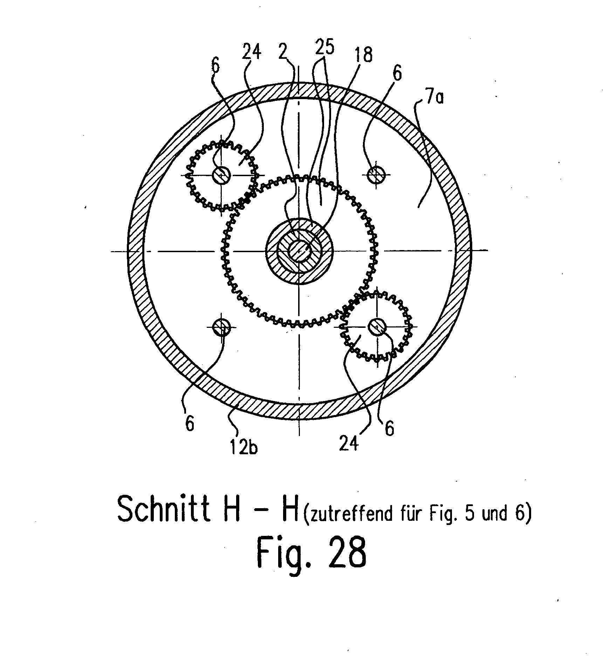

- **Fig. 28**: Schnitt H - H, zutreffend für die Fig. 5 und 6

Der Radialtrieb besteht je nach Ausführung, dargestellt in den Fig. 1 - 6, aus dem Antriebsrad (1), der Antriebswelle (2), der Innenwelle (18), einem oder mehreren Kettentrieben (3 - 7b3, 27), einem oder mehreren Zahnradgetrieben (6 - 10b2 und 13a1 - 14b3), den Flanschen (11a1 bis 11b2), der innenverzahnten Röhre a, b (12a, 12b), dem Abtriebszahnrad c (24), den Übertragungsrädern mit Radwelle a (15), den Übertragungsrädem mit Radwelle b (23), den Bewegungsüberträgerabtriebsrädern (16a1, 16a2, und 17), dem Bewegungsüberträgerabtriebsrad mit Übergangsstück b3 (25), den Bewegungsübertragungswellen a - d (19 - 22), den Bewegungsabtriebsrädem c1 - c3 (1c1 - 1c3) und dem Übertragungszahnrad mit Radwelle c (26).

Die Radwellen (6) und die Innenführungsscheiben a - b3 (7a - 7b3) werden von den jeweiligen Kettentrieben und Zahnradgetrieben gemeinsam genutzt.

In den Fig. 1 - 28 sind die verschiedenen Ausführungen des Radialtriebs mit einem beziehungsweise zwei Zahnradgetrieben und einem oder mehreren Kettentrieben dargestellt.

Die kleinste Ausführung eines Radialtriebs besteht aus einem Zahnradgetriebe und einem Kettentrieb. Die jeweilige Anzahl der Kettentriebe sind im jeweiligen Radialtrieb variabel gestaltbar.

Bei den Radialtriebausführungen bestehen die dargelegten Bauformen für Kettentriebe aus mindestens einem Kettenantriebsrad (3), einem Kettenrad (5), einer Kette (4), einer Radwelle (6), den jeweiligen Innenführungsscheiben a - b3 (7a - 7b3) und je nach Bauform dem Träger (27).
Im Kettentrieb ist die Anzahl der Kettenantriebsräder (3), der Kettenräder (5), der Radwellen (6), der Innenführungsscheiben a - b3 (7a - 7b3) und der jeweils die Bauteile (3) und (5) kämmend formschlüssig umschließenden Ketten (4) variabel.
In Fig. 10, 11 sind beispielhaft einige Alternativen bezüglich der Kettenführungen und der Bewegungsübertragung über die Kettentriebe wiedergegeben, mit jeweils einer bis vier angetriebenen Radwellen (6). Die Anzahl der angetriebenen Radwellen (6) ist variabel.

Der Aufbau des Zahnradgetriebes hängt unter anderem auch vom Aufbau des oder der, das heißt einem oder mehreren, Kettentriebe ab. Das heißt bei einem Kettentrieb -bestehend aus einem Kettenantriebsrad (3), einem Kettenrad (5) und einer Kette (4)- muss kein geschlossener Zahnradverbund aus Planeten- und Umlaufzahnrädern vorausgesetzt werden.
Das Zahnradgetriebe besteht in der kleinsten Bauform mit einem Zahnradgetriebe, Fig. 1, aus dem Planetenzahnrad b (8b), einer Radwelle (6), der Innenführungsscheibe b3 (7b3), dem Umlaufzahnrad b (9b), einer Abtriebsradwelle b (13b), dem Abstützzahnrad mit Übergangsstück b1 (10b1) und der Außenführungsscheibe b3 (14b3).

Das Zahnradgetriebe besteht in der kleinsten Bauform mit zwei Zahnradgetrieben, Fig. 2 - 6, aus den Planetenzahnrädern a, b (8a, 8b), einer Radwelle (6), den jeweiligen Innenführungsscheiben a - b2 (7a - 7b2), den Umlaufzahnrädern a, b (9a, 9b), einer Abtriebsradwelle b (13b), der jeweiligen Abtriebsradwelle a1 oder a2 (13a1 oder 13a2), den jeweiligen Abstützzahnrädem mit Übergangsstück a1 - b2 (10a1 - 10b2), und den jeweiligen Außenführungsscheiben a2 - b2 (14a1 - 14b2).

Im Zahnradgetriebe ist die Anzahl der Planetenzahnräder a, b (8a, 8b), der Radwellen (6), der Umlaufzahnräder a, b (9a, 9b), der Abtriebsradwellen b (13b), der Abtriebsradwellen a1, a2 (13a1, 13 a2) variabel.
Bezüglich der Radialtrieb-Ausführungsbeispiele sind in Fig. 9 beispielhaft Alternativen von Zahnradgetrieben in Querschnittdarstellung wiedergegeben. Alle möglichen umsetzbaren Kombinationen von Planeten- und Umlaufzahnrädern sind in einem Zahnradgetriebe einer Radialtriebausführung einsetzbar.
Wie aus Fig. 9 zu ersehen müssen die Planetenzahnräder a, b (8a, 8b) und die Umlaufzahnräder a, b (9a, 9b) nicht zwingend in einem geschlossenen Zahnradverbund angeordnet sein.

Bei den möglichen Zahnradverbünden wird unterschieden zwischen nicht geschlossenem, geschlossenem und kombiniertem Zahnradverbund.
Einige Beispiele sind zusätzlich in der Fig. 9 wiedergegeben.

Der kleinste nicht geschlossene Verbund von Zahnrädern besteht aus dem jeweiligen Planetenzahnrad a, b (8a, 8b) und dem jeweiligen Umlaufzahnrad a, b (9a, 9b) im Kämmeingriff.

Bei einem geschlossenen Zahnradverbund hat jeweils jedes Planetenzahnrad a, b (8a, 8b) zum jeweilig vor und nachgelagerten Umlaufzahnrad a, b (9a, 9b) eine kämmende Verbindung.
Bei einem nicht geschlossenen Zahnradverbund gehen jeweils ein oder mehrere Planetenzahnräder a, b (8a, 8b) nur einen Kämmeingriff zum jeweils benachbarten Umlaufzahnrad a, b (9a, 9b) ein.
Bei einem kombinierten Zahnradverbund gehen jeweils ein oder mehrere Planetenzahnräder a, b (8a, 8b) jeweils einen Kämmeingriff zu einem jeweiligen benachbarten Umlaufzahnrad a, b (9a, 9b) ein. Des Weiteren gehen jeweils ein oder mehrere Planetenzahnräder a, b (8a, 8b) jeweils einen Kämmeingriff zum vor- und nachgelagerten Umlaufzahnrad a, b (9a, 9b) ein, Fig. 9b.

Die oben erwähnten Gemeinsamkeiten der Radialtriebausführungen aus den Fig. 1 - 6 beziehen sich auf bestimmte übereinstimmende Bauteile und deren Funktionen. Es handelt sich dabei um Bauteile die in allen Radialtriebausführungen im wesentlichen in den Kettentrieben und Zahnradgetrieben eingesetzt werden. Zu den gemeinsamen Bauteilen der Radialtriebausführungen zählen die Antriebswelle (2), die Innenwelle (18), ein oder mehrere Kettentriebe (3 - 7b3, 27), ein oder mehrere Zahnradgetriebe (6 - 10b2 und 13a1 - 14b3) und die Flansche (11a1 - 11b2). Darüber hinaus variieren die Radialtriebausführungen aus den Fig. 1 - 6 je nach Ausführungsvariante, das heißt je nach Form des Bewegungsübertragungsweges.

Die Gemeinsamkeiten der Radialtriebausführungen aus den Fig. 1 - 6 werden im Folgenden beschrieben.
Dabei beziehen sich die Gemeinsamkeiten auch auf die gemeinsamen Funktionen der Radialtriebausführungen bis zu einem bestimmten Punkt. Die Gemeinsamkeiten in der

Funktion der Radialtriebausführungen enden mit der Übertragung der Drehbewegung auf die jeweiligen Umlaufzahnräder.
Die Anzahl der jeweils eingesetzten Komponenten ist variabel.
Gemeinsam ist den Radialtriebausführungen aus den Fig. 2 - 6, dass die jeweilige Antriebswelle (2) fest verbunden mit einem Antriebsrad (1) an deren Ende im Zentrum der jeweiligen Radialtriebausführung sitzt.
Die jeweilige Antriebswelle (2) ragt über den jeweiligen Flansch (11b1, 11b2) hinaus, Fig. 1 - 6. In der Radialtriebausführung aus der Fig. 5 ragt jedoch die Antriebswelle (2) ebenso über den Flansch (11a4) hinaus. Es handelt sich hier um eine durchgehende Antriebswelle (2). Am Ende der Antriebswelle (2) befindet sich dort ebenfalls ein Antriebsrad (1), als Alternative zur Übertragung der Drehbewegung.
Auf der jeweiligen Antriebswelle (2) sitzen des Weiteren fest mit ihr verbunden ein oder mehrere Kettenantriebsräder (3). Die Anzahl der Kettenantriebsräder (3) bestimmen den Aufbau der jeweiligen Kettentriebe und Zahnradgetriebe mit. Jedem Kettenantriebsrad (3) sitzen ein oder mehrere auf einer oder mehreren Radwellen (6) fest positionierte Kettenräder (5) gegenüber. Beide Bauteile (3) und (5) werden jeweils von der Kette (4) formschlüssig umschlossen.
Zusätzlich besteht die Möglichkeit, dass auf den jeweiligen Radwellen (6) weitere unmittelbar einander gegenüber, fest auf den jeweiligen Radwellen (6) sitzend, positionierte Kettenräder (5) von jeweils einer Kette (4) umschlossen werden und somit für die Übertragung der Drehbewegung auf die jeweiligen vor oder nachgelagerte Radwellen (6), auf die beispielsweise keine Drehbewegung über ein Kettenantriebsrad (3) und eine Kette (4) auf ein Kettenrad (5) und Planetenzahnrad a, b (8a, 8b) übertragen wird, sorgen.
Die jeweiligen Kettenräder (5) gehen an ihrem Außendurchmesser, außer mit der Kette (4), keinen direkten Formschluss mit der jeweiligen innenverzahnten Röhre a, b (12a, 12b), als auch einem sonstigen Bauteil ein.
Auf den jeweiligen Radwellen (6) sind jeweils ein oder mehrere Planetenzahnräder a, b (8a, 8b), wie weiter unten beschrieben, positioniert.
Die auf den Radwellen (6) sitzenden Kettenräder (5) sind jeweils kreisförmig, d.h. im gleichen Abstand, um die jeweilige Antriebswelle (2) und den auf ihr positionierten Kettenantriebsräder (3) angeordnet. Die Antriebswelle (2) ist je nach Ausführung in einem oder mehreren Abstützzahnrädem mit Übergangsstück a1 - b2 (10a1 - 10b2) drehbar gelagert. In ihrem Zentrum ist die drehbar gelagerte Innenwelle (18) positioniert.
Die Anordnung und die jeweiligen Funktionszusammenhänge der Bauteile Innenwelle (18), Antriebswelle (2), Kettentrieb (3 -7b3, 27) und innenverzahnte Röhre a, b (12a, 12b) sind aus den Querschnittdarstellungen Schnitt B - B, Fig. 15 -17 für die jeweiligen Radialtriebausführungen zu ersehen. Die Querschnittlinienansatzpunkte sind für die jeweiligen Radialtriebausführungen aus den Fig. 1 - 6 zu entnehmen.

Auf den jeweiligen Abstützzahnrädern mit Übergangsstück a1 - b2 (10a1 -10b2) sitzen jeweils am äußeren Ende der Übergangsstücke die fest mit den jeweiligen Abstützzahnrädem mit Übergangsstück a1 - b2 (10a1 - 10b2) verbundenen Flansche a1 - b2 (11a1 - -11b2). Die Flansche a1 - b2 (11a1 - 11b2) besitzen auf einem äußeren Kreisbild jeweils durchgehende Bohrungen. Durch diese Bohrungen wird die jeweilige Radialtriebausführung über die Flansche a1 -b2 (11a1 - 11 b2) mittels Schrauben und Muttern an anderen feststehenden Bauteilen fixiert bzw. befestigt.
Auf der Antriebswelle (2) sind jeweils drehbar die runden Innenführungsscheiben a - b3 (7a - 7b3) positioniert. Eine Ausnahme dazu ist aus den Fig. 5 und 6 zu ersehen, dort ist die Innenführungsscheibe b2 (7b2) drehbar auf dem Bewegungsüberträgerabtriebsrad mit Übergangsstück b3 (25) gelagert. Die jeweiligen Innenführungsscheiben a - b3 (7a - 7b3) nehmen die Radwellen (6) auf die jeweils drehbar in den Innenführungsscheiben a - b3 (7a - 7b3) gelagert sind. Die Radwellen (6) ragen jeweils über die Innenführungsscheiben a - b3 (7a - 7b3) hinaus. Die jeweiligen Planetenzahnräder a, b (8a, 8b) sind jeweils am Ende einer Radwelle (6) positioniert und fest mit dieser verbunden. Die Planetenzahnräder a, b (8a, 8b) sind kreisförmig um die jeweiligen Abstützzahnräder mit Übergangsstück a1 - b2 (10a1 -10b2) angeordnet. Die Innenführungsscheiben a - b3 (7a - 7b3) haben keine formschlüssige Verbindung mit der jeweiligen innenverzahnten Röhre a. b (12a, 12b).
Die runden Außenführungsscheiben a1 - b3 (14a1 14b3) sind in den Radialtriebausführungen der Fig. 1 - 6 jeweils auf dem Übergangsstück des Bauteils Abstützzahnrad mit Übergangsstück a1 - b2 (10a1-10b2) drehbar gelagert. Die Außenführungsscheiben a1 - b3 (14a1 - 14b3) haben keine formschlüssige Verbindung mit der jeweiligen innenverzahnten Röhre a, b (12a, 12b). Die Außenführungsscheiben a1 - b3 (14a1 - 14b3) nehmen jeweils über die Abtriebsradwellen a1 - b (13a1 - 13b) die Umlaufzahnräder a, b (9a, 9b) auf. Die Umlaufzahnräder a, b (9a, 9b) sind drehbar auf den Abtriebsradwellen a1 - b (13a1 - 13b) gelagert und fest über die Abtriebsradwellen a1 - b (13a1 13b) mit den jeweiligen Außenführungsscheiben a1 - b3 (14a1 -14b3) verbunden. Die Umlaufzahnräder a, b (9a, 9b) sind kreisförmig um die jeweiligen Abstützzahnräder mit Übergangsstück a1 - b2 (10a1 - 10b2) angeordnet. Die Abtriebsradwellen a1 - b (13a1 - 13b) enden zum einen am äußeren Ende der Umlaufzahnräder a, b (9a, 9b) und zum anderen mit dem äußeren Abschluss der Außenführungsscheiben a1 - b3 (14a1 - 14b3).
In den Radialtriebausführungen der Fig. 1 - 6 stehen die jeweiligen Umlaufzahnräder a, b (9a, 9b) im Kämmeingriff mit den jeweiligen Abstützzahnrädern mit Übergangsstück a1 - b2 (10a1 - 10b2), den jeweiligen Planetenzahnrädern a, b (8a, 8b) und der jeweiligen innenverzahnten Röhre a, b (12a, 12b). Die Anordnung und die jeweiligen Funktionszusammenhänge der Bauteile Innenwelle (18), Antriebswelle (2), Zahnradgetriebe (6 -10b2 und 13a1 -14b3) und innenverzahnte Röhre a, b (12a, 12b) sind aus den Querschnittdarstellungen Schnitt A - A, Fig.12 -14 und Schnitt C - C, Fig. 18 - 21 für die jeweiligen Radialtriebausführungen zu ersehen. Die Querschnittlinienansatzpunkte sind für die jeweiligen Radialtriebausführungen aus den Fig. 1 - 6 zu entnehmen.

Vorstehend wurden die Gemeinsamkeiten der Radialtriebausführungen aus den Fig. 1 - 6 beschrieben. Das letzte erwähnte gemeinsame Bauteil der Radialtriebausführungen aus den Fig. 1 - 6 auf das vorstehend eingegangen wird sind die Umlaufzahnräder a, b (9a, 9b).

In den folgenden Ausführungsbeispielen von eins bis sechs wird auf jede Radialtriebausführung, im Rahmen der Fig. 1 - 6, in einem gesonderten Ausführungsbeispiel eingegangen. Ohne die Gemeinsamkeiten wieder zu beschreiben, wird in den Ausführungsbeispielen eins bis sechs mit dem jeweils letzten
gemeinsamen Bauteil aus dem ersten Ausführungsbeispiel, den Umlaufzahnrädem a, b (9a, 9b), begonnen.

Im ersten Ausführungsbeispiel wird das Zusammenspiel der Bauteile, beginnend mit den Umlaufzahnrädern b (9b), der Radialtriebausführung aus der Fig. 1 beschrieben.
Aus dem Ausführungsbeispiel der Fig. 1 ergeben sich auch die verschiedenen Ansatzpunkte für die Querschnittdarstellungen der Fig. 12, 15. Die Querschnittdarstellungen verdeutlichen das Zusammenspiel der Bauteile der Radialtriebausführung aus Fig. 1.

Die Radialtriebausführung aus der Fig. 1 zeigt einen Kettentrieb (3 - 6, 7b3, 27) und ein Zahnradgetriebe (6, 7b3, 8b, 9b, 10b1, 13b, 14b3).
Aus der Radialtriebausführung der Fig. 1 ist zu ersehen wie sich die Drehbewegung über die jeweiligen Umlaufzahnräder b (9b) über die innenverzahnte Röhre a (12a) auf die Bewegungsübertragungswelle d (22) überträgt. Die Bewegungsübertragungswelle d (22) ist drehbar auf der Innenwelle (18) gelagert. Die jeweiligen Radwellen (6) sind im Bereich des Kettentriebes jeweils drehbar im Träger (27) gelagert. Die innenverzahnte Röhre a (12a) weist im Bereich der jeweiligen Umlaufzahnräder b (9b) eine Innenverzahnung und somit Kämmeingriffe zu diesen Bauteilen auf.

Im zweiten Ausführungsbeispiel wird das Zusammenspiel der Bauteile, beginnend mit den Umlaufzahnrädern a, b (9a, 9b) zum Ausführungsbeispiel des Radialtriebes aus der Fig. 2 beschrieben. Aus dem Ausführungsbeispiel der Fig. 2 ergeben sich auch die verschiedenen Ansatzpunkte für die Querschnittdarstellungen der Fig. 13, 16, 18, 24. Die Querschnittdarstellungen verdeutlichen das Zusammenspiel der Bauteile der Radialtriebausführung aus Fig. 2.
Aus der Radialtriebausführung der Fig. 2 ist zu ersehen wie sich die Bewegung über die jeweiligen Umlaufzahnräder a, b (9a, 9b) auf die innenverzahnte Röhre b (12b) überträgt. Die innenverzahnte Röhre b (12b) weist im Bereich der Umlaufzahnräder a, b (9a, 9b) sowie der Übertragungszahnräder mit Radwelle a (15) eine Innenverzahnung und somit Kämmeingriffe zu diesen Bauteilen auf. Die jeweiligen Übertragungszahnräder mit Radwelle a (15) sind über die Radwellen a drehbar im Flansch (11a1) gelagert. Die beiden Zahnräder des Bauteils Übertragungszahnräder mit Radwelle a (15) sind bei jedem Übertragungszahnrad mit Radwelle a (15) fest über die Radwelle a miteinander verbunden. Die Übertragungszahnräder mit Radwelle a (15) sind jeweils mit einem Übertragungszahnrad auf einer Seite des Flansches (11a1) kreisförmig im Kämmeingriff mit der innenverzahnten Röhre b (12b) angeordnet. Auf der anderen Seite des Flansches (11a1) geht jedes Übertragungszahnrad des Bauteils Übertragungszahnräder mit Radwelle a (15) eine kämmende Verbindung, über eine Verzahnung, mit dem Bewegungsüberträgerabtriebsrad a1 (16a1) ein. Das Bewegungsüberträgerabtriebsrad a1 (16a1) ist fest mit der Bewegungsübertragungswelle a (19) verbunden. Die Bewegungsübertragungswelle a (19) ist drehbar auf der Innenwelle (18) gelagert. Am äußeren Ende der Bewegungsübertragungswelle a (19) sitzt das fest mit ihr verbundene Bewegungsabtriebsrad c1 (1c1).

Im dritten Ausführungsbeispiel wird das Zusammenspiel der Bauteile, beginnend mit den Umlaufzahnrädern a, b (9a, 9b) zum Ausführungsbeispiel des Radialtriebes aus der Fig. 3 beschrieben. Aus dem Ausführungsbeispiel der Fig. 3 ergeben sich auch die verschiedenen Ansatzpunkte für die Querschnittdarstellungen der Fig. 13, 16, 19, 22. Die Querschnittdarstellungen verdeutlichen das Zusammenspiel der Bauteile der Radialtriebausführung aus Fig. 3.
Aus der in der Fig. 3 dargestellten Radialtriebausführung ist zu ersehen wie sich die Drehbewegung über die Umlaufzahnräder a, b (9a, 9b) auf die innenverzahnte Röhre b (12b) überträgt. Des Weiteren ist die Übertragung der Drehbewegung durch die jeweiligen Umlaufzahnräder a, b (9a, 9b) auf die Außenführungsscheibe a2 (14a2) zu ersehen. Die innenverzahnte Röhre b (12b) hat im Bereich der Umlaufzahnräder a, b (9a, 9b) eine Innenverzahnung und jeweils Kämmeingriffe mit diesen Bauteilen. Die Übertragungszahnräder mit Radwelle b (23) sind jeweils über die Radwellen b drehbar im Flansch (11 a2) gelagert.
In Fig. 3 gehen die jeweiligen Abtriebsradwellen a2 (13a2) eine feste Verbindung mit der Außenführungsscheibe a2 (14a2) ein. Auf der Außenführungsscheibe a2 (14a2) befindet sich ein Zahnkranz der sich auf Höhe der jeweiligen Antriebsradwellen a2 (13a2) befindet.
Die beiden Zahnräder des Bauteils Übertragungszahnräder mit Radwelle b (23) sind bei jedem Übertragungszahnrad mit Radwelle b (23) fest über die Radwelle b miteinander verbunden. Die Übertragungszahnräder mit Radwelle b (23) sind jeweils mit einem Übertragungszahnrad auf einer Seite des Flansches (11a2) kreisförmig im Kämmeingriff mit dem Zahnkranz der Außenführungsscheibe a2 (14a2) angeordnet. Auf der anderen Seite des Flansches geht jedes Übertragungszahnrad des Bauteils Übertragungszahnräder mit Radwelle b (23) eine kämmende Verbindung, über eine Verzahnung, mit dem Bewegungsüberträgerabtriebsrad (17) ein. Das Bewegungsüberträgerabtriebsrad (17) ist fest mit der Bewegungsübertragungswelle d (22) verbunden. Die Bewegungsübertragungswelle d (22) ist drehbar auf der Innenwelle (18) gelagert. Am äußeren Ende der Bewegungsübertragungswelle d (22) sitzt das fest mit ihr verbundene Bewegungsabtriebsrad c1 (1c1).

Im vierten Ausführungsbeispiel wird das Zusammenspiel der Bauteile, beginnend mit den Umlaufzahnrädern a, b (9a, 9b) zum Ausführungsbeispiel des Radialtriebes aus der Fig. 4 beschrieben. Aus dem Ausführungsbeispiel der Fig. 4 ergeben sich auch die verschiedenen Ansatzpunkte für die Querschnittdarstellungen der Fig. 13, 16, 20, 23, 25, 26, 27. Die Querschnittdarstellungen verdeutlichen das Zusammenspiel der Bauteile der Radialtriebausführung aus Fig. 4.
Im Ausführungsbeispiel der Fig. 4 sind die in den Fig. 2 - 3 ausgeführten Radialtriebausführungen in ihrer jeweiligen Ausführung in einer neuen Radialtriebausführung zusammengefasst. Die Kämmeingriffe und die festen Verbindungen erfolgen jedoch im letzten Ausführungsabschnitt des Radialtriebes der Fig. 4 durch teilweise andere Bauteile.
In der Radialtriebausführung aus der Fig. 4 ist zu ersehen wie sich die Bewegung über die jeweiligen Umlaufzahnräder a, b (9a, 9b) auf die innenverzahnte Röhre b (12b) überträgt. Des Weiteren ist die Übertragung der Bewegung durch die Umlaufzahnräder a, b (9a, 9b) über die jeweiligen Abtriebsradwellen a2 (13a2) auf die Außenführungsscheibe a2 (14a2) zu ersehen. Auf der Außenführungsscheibe a2 (14a2) befindet sich ein Zahnkranz mit dem die Übertragungszahnräder mit Radwelle b (23) einen Kämmeingriff eingehen. Der Zahnkranz befindet sich auf Höhe der jeweiligen Abtriebsradwellen a2 (13a2). Die innenverzahnte Röhre b (12b) weist im Bereich der Umlaufzahnräder a, b (9a, 9b) sowie der jeweiligen Übertragungszahnräder mit Radwelle a (15) eine Innenverzahnung und somit Kämmeingriff mit diesen Bauteilen auf.
Das heißt aus den Kämmeingriffen der Ausführung des Radialtriebes aus der Fig. 4, unter Bezugnahme auf die Fig. 2, dass die jeweiligen Übertragungszahnräder mit Radwelle a (15) jeweils einen Kämmeingriff mit der innenverzahnten Röhre b (12b) und dem Bewegungsüberträgerabtriebsrad a2 (16a2) eingehen. Letztgenanntes Bauteil ist fest mit der Bewegungsübertragungswelle b (20) verbunden. Die Bewegungsübertragungswelle b (20) ist drehbar auf der Bewegungsübertragungswelle c (21) gelagert. Die Bewegungsübertragungswelle b (20) wiederum ist fest mit dem Bewegungsabtriebsrad c2 (1 c2) verbunden.
Das heißt aus den Kämmeingriffen der Radialtriebausführung aus der Fig. 4, unter Bezugnahme auf die Fig. 3, dass die jeweiligen Übertragungszahnräder mit Radwelle b (23) jeweils einen Kämmeingriff mit dem Zahnkranz der Außenführungsscheibe a2 (14a2) und dem Bewegungsüberträgerabtriebsrad (17) eingehen. Letztgenanntes Bauteil ist fest mit der Bewegungsübertragungswelle c (21) verbunden. Die Bewegungsübertragungswelle c (21) ist drehbar auf der Innenwelle (18) gelagert. Die Bewegungsübertragungswelle c (21) wiederum ist fest mit dem Bewegungsabtriebsrad c1 (1c1) verbunden.
Über den Zahnkranz des Bewegungsüberträgerabtriebsrades a2 (16a2) stehen jeweils ein oder mehrere Übertragungszahnräder mit Radwelle c (26) im Kämmeingriff.

Im fünften Ausführungsbeispiel wird das Zusammenspiel der Bauteile, beginnend mit den Umlaufzahnrädern a, b (9a, 9b) zum Ausführungsbeispiel des Radialtriebes aus der Fig. 5 beschrieben. Die innenverzahnte Röhre b (12b) weist im Bereich der Umlaufzahnräder a, b (9a, 9b), eine Innenverzahnung und somit Kämmeingriffe mit diesen Bauteilen auf.
Aus dem Ausführungsbeispiel der Fig. 5 ergeben sich auch die verschiedenen Ansatzpunkte für die Querschnittdarstellungen der Fig. 14, 17, 21, 28. Die Querschnittdarstellungen verdeutlichen das Zusammenspiel der Bauteile der Radialtriebausführung aus Fig. 5.
Im Gegensatz zu den Radialtrieben die in den Ausführungsbeispielen eins bis vier erläutert wurden erfolgt bei der in der Fig. 5 dargestellten Radialtriebausführung die Bewegungsübertragung auch über die jeweiligen Radwellen (6). Auf den Radwellen (6) befindet jeweils sich mit ihr fest verbunden ein Abtriebszahnrad c (24). Die jeweiligen Abtriebszahnräder c (24) sind kreisförmig um das Bewegungsüberträgerabtriebsrad mit Übergangsstück b3 (25) angeordnet. Die jeweiligen letztgenannten Bauteile (24) und (25) gehen jeweils einen Kämmeingriff miteinander ein. Auf dem Bewegungsüberträgerabtriebsrad mit Übergangsstück b3 (25) sitzt am äußeren Ende des jeweiligen Übergangsstückes b3 das fest mit dem Übergangsstück b3 verbundene Bewegungsabtriebsrad (1 c3)

Im sechsten Ausführungsbeispiel wird das Zusammenspiel der Bauteile, beginnend mit den Umlaufzahnrädern a, b (9a, 9b) zum Ausführungsbeispiel des Radialtriebes aus der Fig. 6 beschrieben.
Das Ausführungsbeispiel der Fig. 6 ist eine Kombination aus den Fig. 2 und 5 und als Radialtriebausführung in einer neuen Radialtriebausführung zusammengefasst.
Die Fig. 6 kann demzufolge aus den Fig. 2 und 5 hergeleitet werden.
Aus dem Ausführungsbeispiel der Fig. 6 ergeben sich auch die verschiedenen Ansatzpunkte für die Querschnittdarstellungen der Fig. 14, 17, 18, 24, 28. Die Querschnittdarstellungen verdeutlichen das Zusammenspiel der Bauteile der Radialtriebausführung aus Fig. 6.

Der in den Ausführungen der Fig. 1 - 6 dargestellte Radialtrieb zeigt Übereinstimmungen bis zur Übertragung der Drehbewegung auf die jeweiligen Umlaufzahnräder a, b (9a, 9b).
Bei den in der Erfindung dargestellten Radialtriebausführungen wird die Drehbewegung jeweils über die Antriebswelle (2) auf ein oder mehrere Kettenantriebsräder (3) übertragen. Die jeweiligen Kettenantriebsräder (3) übertragen die Drehbewegung über eine oder mehrere Ketten (4) auf die jeweiligen Kettenräder (5). Kombinationsalternativen von Kettentrieben das heißt beispielhafte Kettenführungen in Kettentrieben sind jeweils aus den Fig. 10, 11 zu ersehen.
Die Kettenräder (5), die mit den jeweiligen Planetenzahnrädern a, b (8a, 8b) gemeinsam auf den jeweiligen Radwellen (6) sitzen, übertragen die Drehbewegung jeweils auf die jeweiligen Planetenzahnräder a, b (8a, 8b). Die Planetenzahnräder a, b (8a, 8b) die sich im geschlossenen, nicht geschlossenen oder kombinierten Zahnradverbund im Kämmeingriff mit den Umlaufzahnrädern a, b (9a, 9b) befinden übertragen die Drehbewegung auf das letztgenannten Bauteil.
Mit der Übertragung der Drehbewegung auf die Umlaufzahnräder a, b (9a, 9b) enden bei den in den Fig. 1 - 6 dargestellten Radialtriebausführungen die Gemeinsamkeiten bei der Übertragung der Drehbewegung.
Im Folgenden wird auf die Besonderheiten bei der Übertragung der Drehbewegung auf jede der Fig. 1 - 6, jeweils beginnend mit den jeweiligen Umlaufzahnräder a, b (9a, 9b), eingegangen.
Bei dem in der Fig. 1 dargestellten Ausführungsbeispiel des Radialtriebes wird die Drehbewegung von den jeweiligen Umlaufzahnrädern b (9b) auf die mit den Umlaufzahnrädern b (9b) im Kämmeingriff stehende innenverzahnte Röhre a (12a) und damit auf die Bewegungsübertragungswelle d (22) übertragen.
Bei dem in der Fig. 2 dargestellten Ausführungsbeispiel des Radialtriebes wird die Drehbewegung von den jeweiligen Umlaufzahnrädern a, b (9a, 9b) auf die mit den Umlaufzahnrädern a, b (9a, 9b) im Kämmeingriff stehende innenverzahnte Röhre b (12b) übertragen. Über die innenverzahnte Röhre b (12b) wird die Drehbewegung über die jeweiligen Übertragungszahnräder mit Radwelle a (15) über das Bewegungsüberträgerabtriebsrad a1 (16a1) auf die Bewegungsübertragungswelle a (19) und von dort auf das Bewegungsabtriebsrad c1 (1c1) übertragen.
Bei dem in der Fig. 3 dargestellten Ausführungsbeispiel des Radialtriebes wird die Drehbewegung von den jeweiligen Umlaufzahnrädern a, b (9a, 9b), ebenso wie in Fig. 2, auf die innenverzahnte Röhre b (12b) übertragen. Über die innenverzahnte Röhre b (12b) und die jeweiligen Abtriebsradwellen a2 (13a2) wird die Drehbewegung über den Zahnkranz der Außenführungsscheibe a2 (14a2) über die jeweiligen Übertragungszahnräder mit Radwelle b (23) über das Bewegungsüberträgerabtriebsrad (17) auf die Bewegungsübertragungswelle d (22) und von dort auf das Bewegungsabtriebsrad c1 (1c1) übertragen. Bei dem in der Fig. 4 dargestellten Ausführungsbeispiel des Radialtriebes sind die Ausführungsbeispiele aus der Fig. 2 - 3 zusammengefasst.
Das heißt aus der Bewegungsübertragung der Fig. 2 resultierend wird die Drehbewegung über die jeweiligen Übertragungszahnräder mit Radwelle a (15) über das Bewegungsüberträgerabtriebsrad a2 (16a2) auf die Bewegungsübertragungswelle b (20) und von dort auf das Bewegungsabtriebsrad c2 (1 c2) übertragen.

Das heißt aus der Bewegungsübertragung der Fig. 3 resultierend wird die Drehbewegung über die jeweiligen Übertragungszahnräder mit Radwelle b (23) über das Bewegungsüberträgerabtriebsrad (17) auf die Bewegungsübertragungswelle c (21) und von dort auf das Bewegungsabtriebsrad c1 (1c1) übertragen. Des Weiteren besteht die Möglichkeit die Drehbewegung über ein oder mehrere weiter außen kämmend mit dem Bewegungsüberträgerabtriebsrad a2 (16a2) verbundene Übertragungszahnräder mit Radwelle c (26) zu übertragen.
In der Fig. 5 wird die Drehbewegung von den jeweiligen Umlaufzahnrädern a, b (9a, 9b) über die innenverzahnte Röhre b (12b) auf die nicht direkt durch den Kettenantrieb angetriebenen Planetenzahnräder a, b (8a, 8b) übertragen. Über die jeweiligen Radwellen (6), auf denen in diesem Fall die fest mit den jeweiligen Radwellen (6) verbundenen Abtriebszahnräder c (24) sitzen wird die Drehbewegung über das Bewegungsüberträgerabtriebsrad mit Übergangsstück b3 (25) auf das Bewegungsabtriebsrad c3 (1c3) übertragen.
In Fig. 6 sind die Funktionen der Fig. 2 und 5 zusammengefasst. Die Übertragung der Bewegung erfolgt wie unter den Fig. 2 und Fig.5 beschrieben.

### Bezugszeichenliste

- 1: Antriebsrad
- 1c1: Bewegungsabtriebsrad c1
- 1c2: Bewegungsabtriebsrad c2
- 1c3: Bewegungsabtriebsrad c3
- 2: Antriebswelle
- 3: Kettenantriebsrad
- 4: Kette
- 5: Kettenrad
- 6: Radwelle
- 7a: Innenführungsscheibe a
- 7b1: Innenführungsscheibe b1
- 7b2: Innenführungsscheibe b2
- 7b3: Innenführungsscheibe b3
- 8a: Planetenzahnrad a
- 8b: Planetenzahnrad b
- 9a: Umlaufzahnrad a
- 9b: Umlaufzahnrad b
- 10a1: Abstützzahnrad mit Übergangsstück a1
- 10a2: Abstützzahnrad mit Übergangsstück a2
- 10a3: Abstützzahnrad mit Übergangsstück a3
- 10a4: Abstützzahnrad mit Übergangsstück a4
- 10b1: Abstützzahnrad mit Übergangsstück b1
- 10b2: Abstützzahnrad mit Übergangsstück b2
- 11a1: Flansch a1
- 11a2: Flansch a2
- 11a3: Flansch a3
- 11a4: Flansch a4
- 11b1: Flansch b1
- 11b2: Flansch b2
- 12a: Innenverzahnte Röhre a
- 12b: Innenverzahnte Röhre b
- 13a1: Abtriebsradwelle a1
- 13a2: Abtriebsradwelle a2
- 13b: Abtriebsradwelle b
- 14a1: Außenführungsscheibe a1
- 14a2: Außenführungsscheibe a2
- 14b1: Außenführungsscheibe b1
- 14b2: Außenführungsscheibe b2
- 14b3: Außenführungsscheibe b3
- 15: Übertragungszahnräder mit Radwelle a
- 16a1: Bewegungsüberträgerabtriebsrad a1
- 16a2: Bewegungsüberträgerabtriebsrad a2
- 17: Bewegungsüberträgerabtriebsrad
- 18: Innenwelle
- 19: Bewegungsübertragungswelle a
- 20: Bewegungsübertragungswelle b
- 21: Bewegungsübertragungswelle c
- 22: Bewegungsübertragungswelle d
- 23: Übertragungszahnräder mit Radwelle b
- 24: Abtriebszahnrad c
- 25: Bewegungsüberträgerabtriebsrad mit Übergangsstück b3
- 26: Übertragungszahnrad mit Radwelle c
- 27: Träger

## Patentansprüche

1. Radialtrieb aus rotierenden und stationär angeordneten Teilen, wobei:
- der Radialtrieb aus Antriebswelle (2), einem oder mehreren Kettentrieben (3 - 7b3, 27), einem oder mehreren Zahnradgetrieben (6 - 10b2, 13a1 -14b3) mit einer gemeinsamen innenverzahnten Röhre a, b (12a, 12b) als äußerem Zentralrad, jeweils fest mit Abstützzahnrädem mit Übergangsstück a1 - b2 (10a1 - 10b2) als innere Zentralräder verbundenen feststehenden Flanschen (11a1 - 11b2), einem Träger, der einen festen Verbund von Außenführungsscheiben a1 - b3 (14a1 -14b3) und Innenführungsscheiben a - b3 (7a - 7b3) umfasst, der Innenwelle (18) und den bewegungsübertragenden Komponenten besteht,
- bei einem oder mehreren Kettentrieben auf der Antriebswelle (2) jeweils ein oder mehrere Kettenantriebsräder (3) fest positioniert sind, wobei ein oder mehrere Radwellen (6) kreisförmig um die Antriebswelle (2) angeordnet sind und in den jeweiligen Innenführungsscheiben a - b3 (7a -7b3) und im Träger (27) jeweils drehbar gelagert sind, wobei ein oder mehrere auf den jeweiligen Radwellen (6) fest positioniert sitzende Kettenräder (5) und ein oder mehrere Kettenantriebsräder (3) Kämmeingriffe mit den jeweiligen Ketten (4) eingehen,
- bei einem Zahnradgetriebe ein oder mehrere Radwellen (6) kreisförmig um die Antriebswelle (2) angeordnet sind und in den jeweiligen Innenführungsscheiben a - b3 (7a - 7b3) und im Träger (27) drehbar gelagert sind, wobei auf den jeweiligen Radwellen (6) die fest mit den Radwellen (6) verbundenen ein oder mehreren Planetenzahnräder a, b (8a, 8b) positioniert sind, wobei die drehbar gelagerten Umlaufzahnräder a, b (9a, 9b) um die jeweiligen Abstützzahnräder mit Übergangsstück a1 - b2 (10a1 - 10b2) herum angeordnet sind und in den jeweiligen Außenführungsscheiben a1 - b3 (14a1 -14b3) über die jeweiligen Abtriebsradwellen a1 - b (13a1 - 13b) fest positioniert sind wobei die Abtriebsradwellen a1 - b (13a1 - 13b) fest mit den jeweiligen Außenführungsscheiben a1 - b3 (14a1 - 14b3) verbunden sind und die Umlaufzahnräder a, b (9a, 9b) drehbar auf den jeweiligen Abtriebsradwellen a1 - b (13a1 - 13b) gelagert sind,
- die Kettenführung in einem oder mehreren Kettentrieben variierbar ist,
- die jeweiligen ein oder mehreren Planetenzahnräder a, b (8a. 8b) und die ein oder mehreren Umlaufzahnräder a, b (9a, 9b) im Zahnradgetriebe untereinander auf unterschiedliche Weise kämmen das heißt in einem nicht geschlossenen, geschlossenen oder kombinierten Zahnradverbund,
- die innenverzahnte Röhre a, b (12a, 12b) jeweils eine Innenverzahnung auf Positionshöhe des jeweiligen Zahnradgetriebes aufweiset und somit Kämmeingriffe mit den jeweiligen Umlaufzahnrädern a, b (9a, 9b) eingeht,
- die jeweiligen Umlaufzahnräder a, b (9a, 9b) einen Kämmeingriff mit den jeweiligen Abstützzahnrädern der Baugruppe Abstützzahnrad mit Übergangsstück a1 - b2 (10a1 - 10b2) eingehen,
- sich die Drehbewegung des Umlaufzahnrades auf dem Abstützzahnrad aus der Drehbewegung des Antriebsrades und dem Abwickeln der Umschlingung um das Antriebsrad zusammensetzt.

2. Radialtrieb nach Anspruch 1 **dadurch gekennzeichnet, dass** ein oder mehrere Antriebsräder (1) fest mit der Antriebswelle (2) verbunden sind, wobei auf beiden Seiten des jeweiligen Flansches a4, b2 (11 a4, 11 b2) jeweils Antriebsräder (1) auf einer durchgehenden Antriebswelle (2) fest positioniert sind, die Antriebswelle (2) ein oder mehrfach drehbar gelagert ist, wobei die Antriebswelle (2) je nach Ausführungsvariante ein oder mehrfach drehbar in den jeweiligen Abstützzahnrädem mit Übergangsstück a1 - b2 (10a1 -10b2) gelagert ist.

3. Radialtrieb nach Anspruch 1 **dadurch gekennzeichnet, dass** der Kettentrieb in seiner kleinsten Form aus einem Kettenantriebsrad (3), einem Kettenrad (5), einer Kette (4), einer Radwelle (6), einer oder mehreren Innenführungsscheiben a - b3 (7a - 7b3) und dem Träger (27) besteht, wobei die Anzahl der über ein oder mehrere Kettenantriebsräder (3), Ketten (4) und Kettenräder (5) angetriebenen Radwellen (6) variabel ist und die Anzahl der jeweiligen Kettenantriebsräder (3), der Kettenräder (5), der Radwellen (6), der Ketten (4) und der Innenführungsscheiben a - b3 (7a - 7b3) variabel sind, wobei jeweils die Kette (4) das jeweilige Kettenantriebsrad (3) und die jeweiligen ein oder mehreren Kettenräder (5), die auf einer oder mehreren Radwellen (6) fest positioniert sind, formschlüssig umschließt, wobei jeweils die Kette (4) zwei oder mehrere Kettenräder (5) auf unterschiedlichen Radwellen (6) formschlüssig umschließt und nicht jedes Kettenrad (5) nur von einer Kette (4) formschlüssig umschlossen werden muss die auch ein Kettenantriebsrad (3) umschließt.

4. Radialtrieb nach Anspruch 1 **dadurch gekennzeichnet, dass** die innenverzahnte Röhre b (12b) eine Innenverzahnung auf Positionshöhe von jeweiligen Übertragungszahnrädern mit Radwelle a (15) aufweist und in Kämmeingriff mit jeweiligen Übertragungszahnrädem mit Radwelle a (15) ist und / oder, dass auf den jeweiligen Radwellen (6) Abtriebszahnräder c (24) sitzen, die wiederum jeweils fest mit den Radwellen (6) verbunden im Kämmeingriff mit einem Bewegungsüberträgerabtriebsrad mit Übergangsstück b3 (25) stehen.

5. Radialtrieb nach Anspruch 1 **dadurch gekennzeichnet, dass** die jeweiligen Kettentriebe (3 - 7b3, 27), und die jeweiligen Zahnradgetriebe (6 -10b2, 13a1 -14b3) die jeweiligen Innenführungsscheiben a - b3 (7a - 7b3) und die jeweiligen Radwellen (6) gemeinsam nutzen, wobei die runden Innenführungsscheiben a - b3 (7a - 7b3) und Außenführungsscheiben a1 - b3 (14a1 -14b3) jeweils in ihrem Zentrum drehbar gelagert sind und die jeweiligen Innenführungsscheiben a - b3 (7a - 7b3) auf der Antriebswelle (2) und auf dem Bewegungsüberträgerabtriebsrad mit Übergangsstück b3 (25) drehbar gelagert sind.

6. Radialtrieb nach Anspruch 1 **dadurch gekennzeichnet, dass** der kleinste nicht geschlossene Verbund von Zahnrädern in einem Zahnradgetriebe aus dem jeweiligen Planetenzahnrad a, b (8a, 8b) und dem jeweiligen Umlaufzahnrad a, b (9a, 9b) im Kämmeingriff besteht, wobei bei einem geschlossenen Zahnradverbund in einem Zahnradgetriebe jeweils jedes Planetenzahnrad a, b (8a, 8b) zum jeweilig im Umfang vor und nachgelagerten Umlaufzahnrad a, b (9a, 9b) eine kämmende Verbindung hat und bei einem nicht geschlossenen Zahnradverbund in einem Zahnradgetriebe ein oder mehrere Planetenzahnräder a, b (8a, 8b) jeweils nur einen Kämmeingriff mit nur einem Umlaufzahnrad a, b (9a, 9b) eingehen, wobei bei einem kombinierten Zahnradverbund in einem Zahnradgetriebe ein oder mehrere Planetenzahnräder a, b (8a, 8b) jeweils nur einen Kämmeingriff mit nur einem Umlaufzahnrad a, b (9a, 9b) eingehen, wobei des Weiteren jeweils ein oder mehrere Planetenzahnräder a, b (8a, 8b) einen Kämmeingriff zum vor- und nachgelagerten Umlaufzahnrad a, b (9a, 9b) eingehen.

7. Radialtrieb nach einem der vorgenannten Ansprüche **dadurch gekennzeichnet, dass** im Zahnradgetriebe in Umfangsrichtung neben einem Planetenzahnrad a, b (8a, 8b) unmittelbar ein weiteres Planetenzahnrad a, b (8a, 8b) positioniert ist und neben einem Umlaufzahnrad a, b (9a, 9b) unmittelbar ein weiteres Umlaufzahnrad a, b (9a, 9b) positioniert ist, wobei die jeweiligen Planetenzahnräder a, b (8a, 8b) und die jeweiligen Umlaufzahnräder a, b (9a, 9b) kreisförmig, das heißt jeweils im gleichen Abstand, um das jeweilige Abstützzahnrad mit Übergangsstück a1 - b2 (10a1-10b2) angeordnet sind, wobei der Radialtrieb derart ausgelegt ist, dass die jeweiligen Planetenzahnräder a, b (8a, 8b) und die jeweilige innenverzahnte Röhre a, b (12a, 12b) entgegengesetzte Drehrichtungen haben.

8. Radialtrieb nach Anspruch 1 **dadurch gekennzeichnet, dass** jeweils die Einzelkomponenten der Baugruppe Abstützzahnrad mit Übergangsstück a1 - b2 (10a1 - 10b2) fest miteinander verbunden sind und die jeweiligen Abstützzahnräder mit Übergangsstück a1 - b2 (10a1 - 10b2) jeweils im Zentrum des Radialtriebes positioniert sind.

9. Radialtrieb nach Anspruch 1 **dadurch gekennzeichnet, dass** sich in den jeweiligen Flanschen a1 - b2 (11a1- 11b2) Bohrungen auf einem Kreisdurchmesser befinden.

10. Radialtrieb nach Anspruch 1 **dadurch gekennzeichnet, dass** die innenverzahnte Röhre a (12a) als Röhre mit einem durch einen Boden verschlossenen Ende gestaltet ist, wobei im Boden zentral eine Bohrung eingebracht ist, in deren Ausgang eine fest mit der innenverzahnten Röhre a (12a) verbundene Bewegungsübertragungswelle d (22) sitzt, wobei die Außenführungsscheiben a1 - b3 (14a1 -14b3) jeweils drehbar auf den jeweiligen Abstützzahnrädem mit Übergangsstück a1 - b2 (10a1 - 10b2) gelagert sind und die jeweiligen Übertragungszahnräder mit Radwelle a, b (15, 23) jeweils Kämmeingriffe mit den Bewegungsüberträgerabtriebsrädem (16a1, 16a2 und 17) eingehen, wobei die Bewegungsüberträgerabtriebsräder (16a1, 16a2, 17) wiederum fest mit jeweiligen Bewegungsübertragungswellen a - d (19 - 22) verbunden sind und die jeweilige Bewegungsabtriebsräder c1 - c3 (1c1 -1c3) jeweils fest mit den Bewegungsübertragungswellen a - d (19 - 22), beziehungsweise dem Bewegungsüberträgerabtriebsrad mit Übergangsstück b3 (25) verbunden sind wobei die über die jeweiligen Radwellen a, b verbundenen Übertragungszahnräder der jeweiligen Baugruppen Übertragungszahnräder mit Radwelle a, b (15, 23) drehbar über die Radwellen a, b in jeweils einem der Flansche a1 - a3 (11a1 -11a3) gelagert sind und in der Größe der Übertragungszahnräder auf den unterschiedlichen Seiten des jeweiligen Flansches a1 - a3 (11a1 -11a3) variierbar sind.

11. Radialtrieb nach Anspruch 1 **dadurch gekennzeichnet, dass** die Innenwelle (18), die sich im Zentrum des Radiaitriebes befindet, mehrfach drehbar gelagert ist, wobei die Innenwelle (18) in der Antriebswelle (2), der innenverzahnten Röhre a, b (12a -12b) und in den jeweils zentral positionierten Bewegungsübertragungswellen a, c, d (19, 21, 22) drehbar gelagert ist und das Bewegungsüberträgerabtriebsrad mit Übergangsstück b3 (25) drehbar auf der Antriebswelle (2) und im Abstützzahnrad mit Übergangsstück b2 (10b2) gelagert ist, wobei ein oder mehrere Übertragungszahnräder mit Radwelle c (26) eine kämmende Verbindung mit dem Bewegungsüberträgerabtriebsrad a2 (16a2) eingehen und die kleinste Bauform des Radialtriebes aus einem Zahnradgetriebe und einem Kettentrieb besteht.

12. Radialtrieb nach Anspruch 1 **dadurch gekennzeichnet, dass** als Radialtriebausgangsbaugruppe vorgesehen ist, dass die innenverzahnte Röhre b (12b) eine Innenverzahnung auf Positionshöhe von jeweiligen Übertragungszahnrädern mit Radwelle a (15) aufweist und in Kämmeingriff mit jeweiligen Übertragungszahnrädern mit Radwelle a (15) ist wobei die jeweiligen Übergangsstücke a1 - b2 der Baugruppe Abstützzahnrad mit Übergangsstück a1 - b2 (10a1 - 10b2) fest mit jeweiligen Flanschen a1 - b2 (11a1 - 11b2) verbunden sind und / oder eine
Außenführungsscheibe a2 (14a2) einen Zahnkranz aufweist mit dem andere jeweilige Übertragungszahnräder mit Radwelle b (23) in Kämmeingriff sind.

## Claims

1. Radial drive consisting of parts arranged in a rotary and stationary way, whereby:
- the radial drive consists of a drive shaft (2), one or several chain drives (3 - 7b3,27), one or several gear units (6 - 10b2, 13a1 -14b3) with a joint inner-toothed tube a, b (12a, 12b) as an outer central wheel, fixed flanges (11a1 - 11b2) in each case connected by means of support gears by means of transition piece a1-b2 (101- 10b2) as inner central wheels,as a carrier comprising a firm assembly of outer guide disks a - b3 (7a-7b3) and inner guide disks a - b3 (7a-7b3), the inner shaft (18) and the motion-transmitting components,
- in each case one or several chain drive wheels (3) are firmly positioned for one or several chain drives on the drive shaft (2), whereby one or several wheel shafts (6) are arranged circularly around the drive shaft (2) and are rotatably mounted in the respective inner guide-disks a - b3 (7a - 7b3) and in the carrier (27) in each case, whereby one or several chain wheels (5) firmly arranged on the respective wheel shafts (6) and one or several chain drive wheels (3) come into engagement with the respective chains (4),
- one or several wheel shafts (6) are arranged circularly around the drive shaft (2) for a gear drive and are rotatably mounted in the respective inner guide-disks a - b3 (7a - 7b3) and in the carrier (27), whereby the one or several planetary gear wheels a,b (8a, 8b) firmly connected to the wheel shafts (6) are firmly positioned on the wheel shafts (6), whereby the planet gears a, b (9a, 9b) rotatably mounted are arranged around the respective support gears with transition peace a1 - a 2 (10a1- 10b2) and are firmly positioned in the respective outer guide disks a1- b3 (14a1-14b3) by means of the output gear wheel shafts a1- b (13a1-13b), whereby the output gear wheel shafts a1- b (13a1-13b) are firmly connected to the respective outer guide disks a1- b3 (14a -14 b3) and the planet gears a, b (9a, 9b) are rotatably mounted on the respective output gear wheel shafts a1- b (13a1-13b),
- the chain guide is variable in one or several chain drives,
- the respective one or several planetary gear wheels a, b (8a,8b) and the one or several planet gears a, b (9a, 9b) come into engagement in the gear drive among themselves in different ways, i. e. in a non-closed, closed or combined assembly of gears,
- the inner-toothed tube a, b (12a, 12b) shows in each case an internal gearing at the size of position of the respective gear drive and, hence, come into engagement with the respective planet gears a, b (9a, 9b),
- the respective planet gears a, b (9a, 9b) come into engagement with the respective support gears of the support gear assembly with transition piece 1- b2 (10a1 - 10b2),
- the rotating movement of the planet gear on the support gear is composed of the rotating movement of the drive gear and the unwinding of the wrap traction around the drive gear.

2. Radial drive, according to claim 1, **characterized in** the way that one or several drive gears (1) are firmly connected to the drive shaft, whereby in each case drive gears (1) are firmly positioned on a continuous drive shaft (2) at both sides of the respective flange a4,b2 (11a4, 11b2), the drive shaft (2) is rotatably mounted in a simple or multiple way, whereby, according to the model, the drive shaft (2) is rotatably mounted in a simple or multiple way in the respective support gears with transition piece a1-b2 (10a1 - 10b2).

3. Radial drive, according to claim 1, **characterized in** the way that the chain drive in its smallest dimension consists of chain drive wheel (3), a chain wheel (5), a chain (4), a wheel shaft (6), one or several inner guide-disks a - b3 (7a - 7b3) and the carrier (27), whereby the number of wheel shafts driven by means of one or several chain drive wheels (3), chains (4) and chain wheels (5) is variable and the number of the respective chain drive wheels (3), the chain wheels (5), the wheel shafts (6), the chains (4) and the inner guide-disks a - b3 (7a - 7b3) are variable, whereby in each case the chain (4) encloses positively the respective chain drive wheel (3) and the respective one or several chain wheels (5) which are firmly positioned on one or several wheel shafts (6), whereby in each case the chain (4) encloses positively two or several chain wheels (5) on different wheel shafts (6) and not each chain wheel (5) has to be solely enclosed positively by a chain (4) which also encloses a chain drive wheel (3).

4. Radial drive, according to claim 1, **characterized in** the way that the inner-toothed tube b (12b) shows an internal gearing at the size of position of respective transmission gears with wheel shaft a (15) and comes into engagement by means of respective transmission gears with wheel shaft a (15) and / or that output gears c (24) which, in turn, in each case are firmly connected to the chain wheels (6) being in engagement with a motion-transmitting output gear with transition piece b3 (25) are located in each case on the respective wheel shafts (6).

5. Radial drive, according to claim 1, **characterized in** the way that the respective chain drives (3 - 7b3, 27), and the respective gear drives (6 - 10b2, 13a1 - 14b3) use jointly the respective inner guide disks a - b3 (7a - 7b3) and the respective wheel shafts (6) whereby the round inner guide disks a - b3 (7a - 7b3) and outer guide disks a1- b3 (14a1 - 14b3) are rotatably mounted in their centres each. and the respective inner guide disks a - b3 (7a - 7b3) are rotatably mounted on the drive shaft (2) and on the motion-transmitting output gear with transition piece b3 (25).

6. Radial drive, according to claim 1, **characterized in** the way that the smallest, non-closed assembly of gears is engaged in a gear drive consisting of the respective planetary gear wheel a, b (8a, 8b) and the respective planet gear a, b (9, 9b), whereby, in case of a closed assembly of gears in a gear drive ineach case, each planetary gear wheel a, b (8a, 8b) is engaged with the planet gear being upstream and downstream each regarding the perimeter and, in case of non-closed assembly of gears in a gear drive, one or several planetary gear wheels a, b (8a, 8b) each are solely engaged with one engagement by means of one sole planet gear a, b (9a, 9b), whereby, in case of a combined assembly of gears in a gear drive, one or several planet gears a, b (8a, 8b) each are sorely engaged with engagement by means of one sole planet gear a, b (9a, 9b), whereby, moreover, in each case one or several planet gears a, b (8a, 8b) come into engagement with the planet gear being upstream and downstream a, b (9a, 9b).

7. Radial drive, according to one of the above-mentioned claims, **characterized in** the way that , in the gear drive in peripheral direction, another planet gear a, b (8a, b) is positioned directly next to a planetary gear wheel a, b (8a, 8b) and another planet gear a, b (9a, 9b) is positioned directly next to a planet gear a, b (9a, 9b), whereby the respective planetary gear wheels a, b (8a, 8b) and the respective planet gears a, b (9 a, 9b) are arranged circularly, i. e. in each case at equal distances around which the respective support gear with transition piece a1- b2 (10a1-10b2), whereby the radial drive is designed such that the respective planetary gear wheels a, b (8a, 8b) and the respective inner-toothed tube a, b (12a, 12b) have opposite directions of rotation.

8. Radial drive, according to claim 1, **characterized in** the way that in each case the single components of the support gear assembly with transition piece a1- b2 (10a1-10b2) are firmly interconnected and the respective support gears with transition piece a1 - b2 (10a1-10b2) each are positioned in the center of the radial drive.

9. Radial drive, according to claim 1, **characterized in** the way that bores on the diameter are existing in the respective flanges a1- b2 (11a1 - 11b2).

10. Radial drive, according to claim 1, **characterized in** the way that the inner-toothed tube a (12a) as a tube is designed by means of an end closed through a bottom, whereby a bore is integrated in the bottom, in which output a motion-transmitting shaft d (22) firmly connected to the inner-toothed tube a (12a) is integrated, whereby the outer guide disks a1-b3 (14a1-14b3) each are rotatably mounted on the respective support gears with the transition piece a1- b2 (10a1-10b2) and the respective
transmitting gears with a wheel shaft a, b (15, 23) each come into engagement with the motion-transmitting output gears (16a1, 16a2 and 17), whereby the motion-transmitting output gears (16a1,16a2 and 17), in turn, are firmly connected to respective motion-transmitting shafts a - d (19 - 22) and the respective movement output gears c1 - c3 (1c1 - 1c3) are firmly connected in each case to the motion-transmitting shafts a - d (19 -22) or the motion-transmitting output gear wheel with transition piece b3 (25), whereby the transmission gears connected by means of the respective wheel shafts (a, b) of the respective transmission gears assembly with wheel shaft a, b (15, 23) are rotatably connected by means of the wheel shafts a, b in one of the flanges a1- a3 (11a1 -11a3) each and are variable in the size of the transmission gears at the different parts of the respective flange a1- a3 (11a1 -11a3).

11. Radial drive, according to claim 1, **characterized in** the way that the inner shaft (18) being in the centre of the radial drive is rotatably-mounted, whereby the inner shaft (18) in the drive shaft (2), the inner-toothed tube a, b (12a -12 b) and in the motion-transmitting output gear wheel shafts a, c, d (19, 21, 22) centrally positioned in each case are rotatably mounted and the motion-transmitting output gear with transition piece b3 (25) is rotatably mounted on the drive shaft (2) and in the support gear with the transition piece b2 (10b2), whereby one or several movement gears with wheel shaft c (26) come into engagement with the motion-transmitting output gear a2 (16a2) and the smallest design of the radial drive consists of a gear drive and a chain drive.

12. Radial drive, according to claim 1, **characterized in** the way that it is provided as a radial drive output assembly, that the inner-toothed tube b (12b) shows an internal gearing at the size of position of respective transmission gears with wheel shafts a (15) and is engaged with respective transmission gears with wheel shafts a (15), whereby the respective transition pieces a1- b2 of the support gear assembly with transition piece a1- b2 (10a1- 10b2) is firmly connected with respective flanges a1- b2 (11a1 - 11b2), and / or an outer disk guide a2 (14a2) shows a crown gear with which other respective transmission gears with wheel shafts b (23) come into engagement.

## Revendications

1. Entraînement radial constitué par des pièces montées de manière rotative et stationnaire:
- en se composant d'un arbre de transmission (2), d'un ou plusieurs entraînement à chaîne (3 - 7b3, 27), d'un ou plusieurs engrenages (6 - 10b2, 13a1-14 b3) avec une tube à denture intérieure commune a, b (12a, 12b) à titre d'une roue planétaire extérieure, des flasques fixes (11a1-11b2), chacuns étant dans une relation fixe par rapport aux pignons d'appui plus pièce fusible a1-b2 (101 -10b2) en titre des roues planétaires intérieures, d'un appui comprenant un ferme raccordement de disques de guidage externes a1- b3 (14a1 - 14 b3) et des disques de guidage internes a - b3 (7a -7b3), d'un arbre intérieur (18) et des composants de transmission de mouvement,
- en montrant qu'un ou plusieurs enchaînements (3) sont solidement positionnés, en cas d'un ou plusieurs entraînements à chaîne, sur l'essieu de pignon entraîné (2), qu'un ou plusieurs essieux (6) sont positionnés circonférentiellement et disposés autour de l'essieu de pignon entraîné (2) et que chacuns sont montés en rotation dans les disques de guidage internes respectifs a -b3 (7a-7b3) et dans l'appui (27), en montrant qu'un ou plusieurs pignons à chaîne (5) étant positionnés sur les essieux respectifs (6) et un ou plusieurs enchaînements (3) avec les chaînes respectives engrènent,
- en montrant, en cas d'un engrenage, qu'un ou plusieurs essieux (6) positionnés circonférentiellement autour de l'essieu de pignon entraîné (2) sont montés en rotation dans les disques de guidage internes a - b3 (7a - 7b3) et dans l'appui (27) et qu'un ou plusieurs pignons planétaires a, b (8a, 8b) solidement fixés avec les essieux (6) sont positionnés sur les essieux respectifs (6), et que les pignons de transmission montés en rotation a, b (9a, 9b) sont disposés autour des pignons d'appui plus pièce fusible a1 - b2 (10a1-10b2) et qu'ils sont solidement positionnés dans les disques de guidage externes a1 - b3 (14a1-14b3) par rapport aux essieux de pignon entraîné a1 - b (13a1-13b), les essieux de pignon entraîné a1- b (13a1 - 13b) étant dans une relation fixe par rapport aux disques de guidage externes a1 - b3 (14a1 - 14b3) et les pignons planétaires a, b (9a, 9b) étant montés en rotation sur les essieux de pignon entraîné (a1-b (13a1 -13 b),
- en montrant que le guidage de chaîne est variable dans un ou plusieurs entraînements à chaîne,
- en montrant qu'un ou plusieurs pignons planétaires a, b (8a, 8b) et un ou plusieurs roues de renvoi a, b (9a, 9b) engrènent entre eux, de différentes manières, dans l'engrenage, c'est-à-dire dans un raccordement de pignons non-fermé, fermé et combiné,
- en montrant que la tube à denture interne a, b (12a, 12b) contient une denture interne sur le niveau de position de l'engrenage respectif et, ainsi, qu'elle engrène avec les roues de renvoi respectives a, b (9a, 9b),
- en montrant que les roues de renvoi respectives a, b (9a, 9b) engrènent avec les pignons d'appui de l'ensemble de pignons d'appui plus pièce fusible a1 - b2 (10a1- 10b2),
- en montrant que le mouvement de rotation de la roue de renvoi sur le pignon d'appui se compose du mouvement de rotation de l'engrenage d'entraînement et du déroulement de l'enroulement autour de l'engrenage d'entraînement.

2. Entraînement radial, selon la revendication 1, **caractérisé en ce qu'**un ou plusieurs engrenages d'entraînement (1) sont dans une relation fixe par rapport à l'arbre de transmission, en montrant que les engrenages d'entraînements (1) sont positionnés sur un arbre de transmission continu (2), sur les deux côtés du flasque respectif a4, b2 (11a4, 11b2), que l'arbre de transmission (2) est monté en rotation de manière simple ou multiple, que l'arbre de transmission (2), selon le type d'exécution, est monté en rotation de manière simple ou multiple dans les pignons d'appui plus pièce fusible a1-b2 (10a1-10b2).

3. Entraînement radial, selon la revendication 1, **caractérisé en ce que** l'entraînement à chaîne consiste, dans sa dimension la plus petite, en un enchaînement, (3), un pignon à chaîne (5), une chaîne (4), un essieu (6), un ou plusieurs disques de guidages internes a - b3 (7a - 7b3) et un appui (27), en montrant que le nombre d'essieux étant entraîné par des enchaînements (3), des chaînes (4) et des pignons (5) est variable et que le nombre d'enchaînements (3), de pignons à chaînes (5), d'essieux (6), de chaînes et de disques de guidage internes a - b3 (7a -7b3) est variable, en montrant que la chaîne (4), l'enchaînement (3) et un ou plusieurs pignons à chaînes (5) positionnés dans une relation fixe sur un ou plusieurs essieux (6) sont connectés par engagement positif, en montrant que la chaîne (4) deux ou plusieurs pignons à chaîne (5) étant sur des différents essieux (6) sont connectés par engagement positif à l'aide d'une chaîne (4) et qu'il n'est pas nécessaire de ne connecter par engagement positif chaque pignon à chaîne qu'à l'aide d'une chaîne (4) connectant également un enchaînement (3).

4. Entraînement radial, selon la revendication 1, **caractérisé en ce que** la tube à denture interne b (12b) montre une denture interne sur le niveau de position des pignons de transmission avec l'essieu a (15) et engrène avec les pignons de transmission avec l'essieu (15) et / ou que les pignons entraîné c (24) étant, à leur tour, dans une relation fixe par rapport aux essieux en s'engrenant avec un engrenage d'entraînement de transmission de mouvement plus pièce fusible b3 (25) sont positionnés sur les essieux (6).

5. Entraînement radial, selon la revendication 1, **caractérisé en ce que** les entraînements à chaîne (3-7b3, 27) et les engrenages (6 - 10b2, 13a1 - 14b3) se servent ensemble de disques de guidage internes a - b3 (7a - 7b3) et d'essieux respectifs (6), en montrant que les disques de guidage internes ronds a - b3 (7a - 7b3) et les disques de guidage externes a1-b3 (14a1 - 14b3) sont montés en rotation dans leur centre
et les disques de guidage internes a - b3 (7a -7b3) sont montés en rotation sur l'arbre de transmission (2) et sur le pignon entraîné de transmission de mouvement avec pièce fusible b3 (25).

6. Entraînement radial, selon la revendication 1, **caractérisé en ce que** le plus petit raccordement non-fermé de pignons est engrené dans un engrenage comprenant un pignon planétaire a, b (8a, 8b) et une roue de renvoi a, b (9a, 9b), en montrant que, dans un raccordement de pignons fermé dans un engrenage, chaque pignon planétaire a, b (8a, 8b) est engrené par rapport à la roue de renvoi a, b (9a, 9b) dans le périmètre montée en aval et en amont et, dans un raccordement de pignons non-fermé dans un engrenage, un ou plusieurs pignons planétaires a, b (8a, 8b) ne sont engrenés qu'une fois par l'intermédiaire d'une seule roue de renvoi a, b (9a, 9b), en montrant que, dans un raccordement de pignon combiné dans un engrenage, un ou plusieurs pignons planétaires a, b (8a, 8b) ne sont engrenés qu'une fois par l'intermédiaire d'une seule roue de renvoi a, b (9a, 9b), en montrant, en outre, un ou plusieurs pignons planétaires a, b (8a, 8b) sont engrenés par rapport à la roue de renvoi a, b (9a, 9b) montée en aval et en amont.

7. Entraînement radial, selon une des revendications susmentionnées, **caractérisé en ce que**, dans un engrenage le long de la circonférence, un autre pignon planétaire a, b (8a, 8b) est positionné directement à côté d'un pignon planétaire a, b (8a, 8b) et un autre roue de renvoi a, b (9a, 9b) est directement positionnée à côté d'une roue de renvois a, b (9a, 9b), en montrant que les pignons planétaires a, b (8a, 8b) et les roues de renvois a, b (9a, 9b) sont positionnés circonférentiellement, c'est-à-dire chacuns à une distance égale, autour du pignon d'appui plus pièce fusible a1 - b2 (10a1-10b2), en montrant que l'entraînement radial est disposé de telle sorte que les pignons planétaires a, b (8a, 8b) et la tube à denture interne a, b (12a, 12 b) présentent des directions de rotation opposées.

8. Entraînement radial, selon la revendication 1, **caractérisé en ce que** les composants individuels de l'ensemble de pignons d'appui plus pièce fusible a1- b2 (10a1 - 10b2) sont montés dans une relation fixe et les pignons d'appui plus pièce fusible a1- b2 (10a1-10b2) sont positionnés dans le centre de l'entraînement radial.

9. Entraînement radial, selon la revendication 1, **caractérisé en ce qu'**ils se trouvent des alésages sur un diamètre dans les flasques a1 - b2 (11a1 - 11b2).

10. Entraînement radial, selon la revendication 1, **caractérisé en ce que** la tube à denture interne a (12a) à titre d'une tube est conçue avec une extrémité fermé par un fond, en montrant que un alésage est placé de manière centrale, dans la sortie duquel se trouve un essieu de transmission de mouvement d (22) monté dans une relation fixe par rapport à la tube à denture interne a (12a), en montrant que les disques de guidage externes a1- b3 (14a1-14b
sont montés en rotation sur les pignons d'appui plus pièce fusible a1-b2 (10a1-10b2) et les pignons de transmission plus essieu a, b (15, 23) s'engrènent avec les engrenages d'entraînement de transmission de mouvement (16a1, 16a2 and 17), en montrant que les engrenages d'entraînement de transmission de mouvement (16a1, 16a2 and 17), à leur tour, sont dans une relation fixe avec les essieux de transmission de mouvement a - d (19 - 22) et les essieux de transmission de mouvement a - d (19 - 22) et les engrenages d'entraînement de mouvement c1 - c3 (1c1-1c3) sont dans une relation fixe par rapport aux essieux de transmission de mouvement a - d (19 - 22) ou par rapport à l'engrenage d'entraînement de transmission de mouvement plus pièce fusible b3 (25), en montrant que les pignons de transmission reliés aux essieux a, b de l'ensemble de pignons de transmission plus essieu a, b (15,23) sont montés en rotation par l'intermédiaire des essieux, b dans un des flasques a1 - a3 (11a1- 11a3) et sont variables en ce qui concerne l'envergure des pignons de transmission sur les différents côtés du flasque respectif a1 - a3 (11a1 - 11a3).

11. Entraînement radial, selon la revendication 1, **caractérisé en ce que** l'arbre intérieur (18) étant dans le centre de l'entraînement radial est monté en rotation à plusieurs reprises, en montrant que l'arbre intérieur (18) dans l'arbre de transmission (2), dans la tube à denture interne a, b (12a, 12b) et dans les essieux de transmission de mouvement positionnés centralement a, c, d (19, 21, 22) sont montés en rotation et l'engrenage d'entraînement de transmission de mouvement plus pièce fusible b3 (25) est monté en rotation sur l'arbre de transmission (2) et dans le pignon d'appui plus pièce fusible b2 (10b2), en montrant qu'un ou plusieurs pignons de transmission de mouvement plus essieu c (26) sont engrenés avec l'engrenage d'entraînement de transmission de mouvement a2 (16a2) et la plus petite forme de construction de l'entraînement radial comprend un engrenage et un entraînement à chaîne.

12. Entraînement radial, selon la revendication 1, **caractérisé en ce qu'**il est prevu comme ensemble d'entraînement radiaux de sortie que la tube à denture interne b (12b) présente une denture interne sur le niveau de position des pignons de transmission plus essieu a (15) et est engrenée avec les pignons de transmission plus essieu a (15), en montrant que les pièces fusibles a1 - b2 de l'ensemble de pignons d'appui plus pièce fusible a1- b2 (10a1 -10 b2) sont dans une relation fixe par rapport aux flasques a1 - b2 (11a1 - 11b2), et / ou un disque de guidage externe a2 (14a2) montre une couronne dentée avec laquelle d'autres pignons de transmission plus essieu b (23) sont engrenés.
